# EUROPEAN PATENT APPLICATION

(11) **EP 4 737 290 A1**
(43) Date of publication of application: **06.05.2026**
(21) Application number: 25206365.6
(22) Date of filing: 02.10.2025
(51) Int. Cl.: B62K 25/28

(54) **STRADDLED VEHICLE**

(30) Priority: 30.10.2024 JP 2024190550
(71) Applicant: Yamaha Hatsudoki Kabushiki Kaisha, Iwata-shi, Shizuoka 438-8501 (JP)
(72) Inventor: Takano, Kazuhisa, Iwata-shi, Shizuoka, 4388501 (JP)
(74) Representative: Grünecker Patent- und Rechtsanwälte PartG mbB

(57) **Abstract**

A straddled vehicle (1) includes: a vehicle body frame (2); a first shaft (A1) extending in a width direction (Y) and supported by the vehicle body frame (2); a rotating member (19) supported by the first shaft (A1) and rotating about the first shaft (A1); a pivot shaft (P) supported by the rotating member (19); a rear arm (9) supported by the pivot shaft (P); a rear axle (R) supported by the rear arm (9); a rear wheel (11) supported by the rear axle (R); and a coupling mechanism (18) coupled to the vehicle body frame (2), the rotating member (19), and the rear arm (9), wherein, a distance between an axis (a1) of the first shaft (A1) and an axis (p) of the pivot shaft (P) is defined as a first distance (E1), and the first distance (E1) is 50 mm or more.

## Description

The present invention relates to a straddled vehicle.

A straddled vehicle disclosed in JP 2014-181007 A includes a vehicle body frame, a pivot shaft, a rear arm, a rear axle, and a rear wheel. The pivot shaft is supported by the vehicle body frame. The rear arm is supported by the pivot shaft. The rear arm rotates about a pivot shaft with respect to the vehicle body frame. The rear axle is supported by the rear arm. The rear wheel is supported by the rear axle.

When the rear arm rotates about the pivot shaft with respect to the vehicle body frame, an angle of the rear arm changes. When the angle of the rear arm changes, the state of the straddled vehicle or the behavior of the straddled vehicle changes. Therefore, when the change in the angle of the rear arm is small, it is easy for a driver to drive the straddled vehicle.

Here, the angle of the rear arm is, for example, an angle between an axis of the rear arm and a reference line in a side view of the straddled vehicle. The axis of the rear arm is a virtual line connecting an axis of the pivot shaft and an axis of the rear axle in the side view of the straddled vehicle. For example, the reference line may be defined by the vehicle body frame. Alternatively, the reference line may be defined by a road surface with which the rear wheel comes into contact.

The longer the rear arm, the smaller the change in angle of the rear arm. However, it may be difficult to increase the length of the rear arm.

It is the an object of the present invention is to provide a straddled vehicle that can easily reduce a change in angle of a rear arm.

According to the present invention said object is solved by a straddled vehicle having the features of the independent claim 1. Preferred embodiments are laid down in the dependent claims.

First, it has been studied that a straddled vehicle includes a movable mechanism. The movable mechanism moves the pivot shaft with respect to the vehicle body frame.

For example, the movable mechanism includes a first shaft, a rotating member, and a coupling mechanism. The first shaft is supported by the vehicle body frame. The rotating member is supported by the first shaft. The rotating member is configured to rotate about the first shaft with respect to the vehicle body frame. The pivot shaft is supported by the rotating member. The rear arm is supported by the pivot shaft. The rear arm is configured to rotate about the pivot shaft with respect to the rotating member. The coupling mechanism is coupled to the rear arm, the rotating member, and the vehicle body frame.

When the rear axle moves with respect to the vehicle body frame, the rear arm rotates about the pivot shaft with respect to the rotating member, and the coupling mechanism rotates the rotating member about the first shaft with respect to the vehicle body frame. When the rotating member rotates about the first shaft with respect to the vehicle body frame, the pivot shaft rotates about the first shaft with respect to the vehicle body frame. In summary, when the rear axle moves with respect to the vehicle body frame, the pivot shaft moves with respect to the vehicle body frame. Therefore, it is easy to reduce the change in the angle of the rear arm.

However, it has been found that a new problem occurs in a case where the straddled vehicle includes the movable mechanism. The rotation of the pivot shaft about the first shaft with respect to the vehicle body frame is decomposed into a first movement of the pivot shaft and a second movement of the pivot shaft. The first movement of the pivot shaft is a movement of the pivot shaft with respect to the vehicle body frame in an up-down direction of the straddled vehicle. The second movement of the pivot shaft is a movement of the pivot shaft with respect to the vehicle body frame in a front-rear direction of the straddled vehicle. A new problem is that the second movement of the pivot shaft may become significantly greater when the pivot shaft moves with respect to the vehicle body frame.

For example, the straddled vehicle includes a drive shaft and a drive mechanism. The drive shaft outputs power. The drive shaft is coupled to, for example, an engine or a transmission. The drive mechanism transmits power from the drive shaft to the rear wheel. The drive mechanism includes, for example, a chain, a belt, or a drive shaft. A length of the drive mechanism is substantially equal to a distance between the rear axle and the drive shaft. When the pivot shaft moves with respect to the vehicle body frame, the distance between the drive shaft and the rear axle may vary significantly. For example, when an amount of the second movement of the pivot shaft is significantly large, the distance between the rear axle and the drive shaft may vary significantly. Therefore, it may be difficult for the drive mechanism to transmit power from the drive shaft to the rear wheel. For example, in a case where the drive mechanism includes the chain, movement of the pivot shaft with respect to the vehicle body frame may cause the chain to slack. Consequently, the drive mechanism may need to have a complex structure.

According to the present teaching a straddled vehicle includes:
a vehicle body frame;
a first shaft supported by the vehicle body frame and extending in a width direction of the straddled vehicle;
a rotating member supported by the first shaft and configured to rotate about the first shaft with respect to the vehicle body frame;
a pivot shaft supported by the rotating member and extending in the width direction of the straddled vehicle;
a rear arm supported by the pivot shaft and configured to rotate about the pivot shaft with respect to the rotating member with regard to an up-down direction of the straddled vehicle;
a rear axle supported by the rear arm and extending in the width direction of the straddled vehicle;
a rear wheel arranged at a rear side with regard to the front-rear direction of the straddled vehicle and supported by the rear axle; and
a coupling mechanism coupled to the vehicle body frame, the rotating member, and the rear arm,
in which in a side view of the straddled vehicle, a distance between an axis of the first shaft and an axis of the pivot shaft is set as a first distance, and
the first distance is 50 mm or more.

The straddled vehicle includes the vehicle body frame, the first shaft, the rotating member, the pivot shaft, the rear arm, the rear axle, the rear wheel, and the coupling mechanism. The first shaft is supported by the vehicle body frame. The first shaft extends in the width direction of the straddled vehicle. The rotating member is supported by the first shaft. The rotating member is configured to rotate about the first shaft with respect to the vehicle body frame. The pivot shaft is supported by the rotating member. The pivot shaft extends in the width direction of the straddled vehicle. The rear arm is supported by the pivot shaft. The rear arm is configured to rotate about the pivot shaft with respect to the rotating member. The rear axle is supported by the rear arm. The rear axle extends in the width direction of the straddled vehicle. The rear wheel is supported by the rear axle. The coupling mechanism is coupled to the vehicle body frame, the rotating member, and the rear arm. Therefore, when the rear axle moves with respect to the vehicle body frame, the rear arm rotates about the pivot shaft with respect to the rotating member, and the coupling mechanism rotates the rotating member about the first shaft with respect to the vehicle body frame. When the rotating member rotates about the first shaft with respect to the vehicle body frame, the pivot shaft rotates about the first shaft with respect to the vehicle body frame. In summary, when the rear axle moves with respect to the vehicle body frame, the pivot shaft moves with respect to the vehicle body frame. Therefore, it is easy to reduce the change in the angle of the rear arm.

In a side view of the straddled vehicle, a distance between the axis of the first shaft and the axis of the pivot shaft is defined as a first distance. The first distance is 50 mm or more. Thus, the first distance is comparatively large. Therefore, even when the pivot shaft moves with respect to the vehicle body frame, it is easy to reduce an amount of the second movement of the pivot shaft. Consequently, it is easy to transmit power from the drive shaft to the rear wheel.

In summary, in the straddled vehicle, it is easy to reduce the change in the angle of the rear arm. Moreover, in the straddled vehicle, it is easy to reduce the amount of the second movement of the pivot shaft.

Note that the angle of the rear arm is, for example, an angle between the axis of the rear arm and the reference line in the side view of the straddled vehicle. The axis of the rear arm is a virtual line connecting an axis of the pivot shaft and an axis of the rear axle in the side view of the straddled vehicle. For example, the reference line may be defined by the vehicle body frame. Alternatively, the reference line may be defined by a road surface with which the rear wheel comes into contact.

The second movement of the pivot shaft is a movement of the pivot shaft with respect to the vehicle body frame in a front-rear direction of the straddled vehicle.

In the above-described straddled vehicle, it is preferable that the first distance be 100 mm or more.

Therefore, it is easier to reduce the amount of the second movement of the pivot shaft.

In the above-described straddled vehicle, it is preferable that the first shaft overlaps the vehicle body frame in the side view of the straddled vehicle.

Therefore, it is easy for the vehicle body frame to support the first shaft.

In the above-described straddled vehicle, it is preferable that the pivot shaft does not overlap the vehicle body frame in the side view of the straddled vehicle.

Therefore, it is easy to set the first distance to 50 mm or more.

In the above-described straddled vehicle, it is preferable that
the first shaft is disposed more rearward than the pivot shaft in the side view of the straddled vehicle, and
the first shaft is disposed more forward than the rear axle in the side view of the straddled vehicle.

Therefore, the first shaft is disposed at an appropriate position with respect to the pivot shaft. The first shaft is disposed at an appropriate position with respect to the rear axle. Consequently, the pivot shaft is thus disposed in an appropriate position with respect to the rear axle.

In the above-described straddled vehicle, it is preferable that
a range in which the pivot shaft is movable is defined as a pivot movable range, and
the pivot movable range is limited to an area more forward than the first shaft.

In other words, in the above-described straddled vehicle, it is preferable that the entire pivot movable range is disposed in the area more forward than the first shaft with regard to the front-rear direction of the straddled vehicle.

Therefore, it is easy to reduce the amount of the second movement of the pivot shaft.

Here, the pivot movable range is a part on a circumference centered on the first shaft. When the pivot shaft rotates about the first shaft, the pivot shaft moves within the pivot movable range.

In the above-described straddled vehicle, it is preferable that
the above-described straddled vehicle includes a drive shaft that outputs power,
the drive shaft is disposed more forward than the pivot shaft with regard to the front-rear direction of the straddled vehicle, and
the pivot movable range extends from a position higher than a virtual line connecting the drive shaft and the first shaft to a position lower than the virtual line with regard to the up-down direction of the straddled vehicle in a side view of the straddled vehicle.

Therefore, it is easy to increase the amount of the first movement of the pivot shaft. Consequently, it is easy to reduce the change in the angle of the rear arm.

The first movement of the pivot shaft is a movement of the pivot shaft with respect to the vehicle body frame in an up-down direction of the straddled vehicle.

In the above-described straddled vehicle, it is preferable that the pivot movable range extends from a position higher than the first shaft to a position lower than the first shaft in a side view of the straddled vehicle.

Therefore, it is easy to increase the amount of the first movement of the pivot shaft.

In the above-described straddled vehicle, it is preferable that a distance between the drive shaft and the rear axle when the pivot shaft is located on the virtual line in a side view of the straddled vehicle is shorter than a distance between the drive shaft and the rear axle when the pivot shaft is located higher than the virtual line or lower than the virtual line with regard to the up-down direction of the straddled vehicle in a side view of the straddled vehicle.

Therefore, even when the pivot shaft is located higher than the virtual line or lower than the virtual line in the side view of the straddled vehicle, it is easy to transmit power from the drive shaft to the rear wheel.

In the above-described straddled vehicle, it is preferable that a distance between the drive shaft and the rear axle when the pivot shaft and the rear axle are respectively located on the virtual line in the side view of the straddled vehicle is shorter than a distance between the drive shaft and the rear axle when the pivot shaft and the rear axle are respectively located lower than the virtual line in the side view of the straddled vehicle.

Therefore, even when the pivot shaft and the rear axle are respectively located lower than the virtual line in the side view of the straddled vehicle, it is easy to transmit power from the drive shaft to the rear wheel.

In the above-described straddled vehicle, it is preferable that a distance between the drive shaft and the rear axle when the pivot shaft and the rear axle are respectively located on the virtual line in the side view of the straddled vehicle is shorter than a distance between the drive shaft and the rear axle when the pivot shaft and the rear axle are respectively located higher than the virtual line in a side view of the straddled vehicle.

Therefore, even when the pivot shaft and the rear axle are respectively located higher than the virtual line in the side view of the straddled vehicle, it is easy to transmit power from the drive shaft to the rear wheel.

In the above-described straddled vehicle, it is preferable that
a length of the pivot movable range in the up-down direction of the straddled vehicle is defined as a first length,
a length of the pivot movable range in the front-rear direction of the straddled vehicle is defined as a second length, and
the second length is shorter than the first length.

The first length corresponds to an upper limit value of the amount of the first movement of the pivot shaft. The second length corresponds to an upper limit value of the amount of the second movement of the pivot shaft. Therefore, it is easy to increase the amount of the first movement of the pivot shaft. Consequently, it is easy to reduce the change in the angle of the rear arm. Moreover, it is easy to reduce the amount of the second movement of the pivot shaft.

In the above-described straddled vehicle, it is preferable that the rotating member has an arm shape extending from the first shaft to the pivot shaft in a side view of the straddled vehicle.

Therefore, the rotating member does not have a disk shape centered on the first shaft. Consequently, it is easy to reduce the size of the rotating member.

In the above-described straddled vehicle, it is preferable that the rotating member includes a rear end supported by the first shaft, and a front end supporting the pivot shaft.

Therefore, it is easy to reduce the size of the rotating member.

In the above-described straddled vehicle, it is preferable that
in a side view of the straddled vehicle, a distance between the axis of the pivot shaft and an axis of the rear axle is defined as a second distance, and
the second distance is smaller than or equal to 15 times the first distance.

Therefore, even when the second distance is comparatively short, it is easy to reduce the change in the angle of the rear arm.

In the above-described straddled vehicle, it is preferable that when the first distance is 100 mm or more, the second distance is equal to or smaller than 5 times the first distance.

Therefore, even when the second distance is shorter, it is easy to reduce the change in the angle of the rear arm.

In the above-described straddled vehicle, it is preferable that the second distance is 750 mm or less.

Therefore, even when the second distance is 750 mm or less, it is easy to reduce the change in the angle of the rear arm.

In the above-described straddled vehicle, it is preferable that when the rear arm moves with respect to the vehicle body frame, the coupling mechanism rotates the rotating member about the first shaft with respect to the vehicle body frame.

When the rear arm moves with respect to the vehicle body frame, the rear axle moves with respect to the vehicle body frame. When the coupling mechanism rotates the rotating member about the first shaft with respect to the vehicle body frame, the pivot shaft moves with respect to the vehicle body frame. Therefore, it is easy for the pivot shaft to move with respect to the vehicle body frame when the rear axle moves with respect to the vehicle body frame. Consequently, it is easy to reduce the change in the angle of the rear arm.

In the above-described straddled vehicle, it is preferable that
when the rear axle moves upward with respect to the vehicle body frame with regard to the up-down direction of the straddled vehicle, the coupling mechanism moves the pivot shaft upward with respect to the vehicle body frame with regard to the up-down direction of the straddled vehicle, and
when the rear axle moves downward with respect to the vehicle body frame with regard to the up-down direction of the straddled vehicle, the coupling mechanism moves the pivot shaft downward with respect to the vehicle body frame with regard to the up-down direction of the straddled vehicle.

Therefore, it is easy to reduce the change in the angle of the rear arm when the rear axle moves upward with respect to the vehicle body frame. Furthermore, it is easy to reduce the change in the angle of the rear arm when the rear axle moves downward with respect to the vehicle body frame.

In the above-described straddled vehicle, it is preferable that
when the rear axle rotates clockwise about the pivot shaft in a left side view of the straddled vehicle, the pivot shaft rotates counterclockwise about the first shaft, and
when the rear axle rotates counterclockwise about the pivot shaft in the left side view of the straddled vehicle, the pivot shaft rotates clockwise about the first shaft.

That is, the pivot shaft rotates in a direction opposite to the rear axle. Therefore, it is easy to reduce the change in the angle of the rear arm.

In the above-described straddled vehicle, it is preferable that
the coupling mechanism includes:
a second shaft supported by the vehicle body frame and extending in the width direction of the straddled vehicle;
a first link member coupled to the second shaft;
a third shaft supported by the first link member and extending in the width direction of the straddled vehicle;
a fourth shaft supported by the rear arm and extending in the width direction of the straddled vehicle;
a second link member coupled to the third shaft and the fourth shaft;
a fifth shaft supported by the first link member and extending in the width direction of the straddled vehicle;
a sixth shaft supported by the rotating member and extending in the width direction of the straddled vehicle; and
a third link member coupled to the fifth shaft and the sixth shaft.

When the rear axle moves with respect to the vehicle body frame, the rear arm and the fourth shaft move with respect to the vehicle body frame. When the fourth shaft moves with respect to the vehicle body frame, the second link member moves with respect to the vehicle body frame. When the second link member moves with respect to the vehicle body frame, the third shaft, the first link member, and the fifth shaft rotate about the second shaft with respect to the vehicle body frame. When the fifth shaft rotates about the second shaft with respect to the vehicle body frame, the third link member moves with respect to the vehicle body frame. When the third link member moves with respect to the vehicle body frame, the sixth shaft, the rotating member, and the pivot shaft rotate about the first shaft with respect to the vehicle body frame. In summary, it is easy for the coupling mechanism to move the pivot shaft with respect to the vehicle body frame when the rear axle moves with respect to the vehicle body frame.

In the above-described straddled vehicle, it is preferable that
the first link member is configured to rotate about the second shaft with respect to the vehicle body frame,
the second link member is configured to rotate about the third shaft with respect to the first link member and to rotate about the fourth shaft with respect to the rear arm, and
the third link member is configured to rotate about the fifth shaft with respect to the first link member and to rotate about the sixth shaft with respect to the rotating member.

Therefore, it is easier for the coupling mechanism to rotate the rotating member about the first shaft with respect to the vehicle body frame when the rear axle moves with respect to the vehicle body frame. Consequently, it is easier for the coupling mechanism to rotate the pivot shaft about the first shaft with respect to the vehicle body frame when the rear axle moves with respect to the vehicle body frame.

In the above-described straddled vehicle, it is preferable that
the rear axle is disposed more rearward than the pivot shaft,
the fourth shaft is disposed more rearward than the pivot shaft,
the third shaft is disposed more rearward than the second shaft,
the fifth shaft is disposed more rearward than the second shaft,
the sixth shaft is disposed more forward than the first shaft, and
the pivot shaft is disposed more forward than the first shaft.

The movement of the rear axle and the fourth shaft will be described. The rear axle is disposed more rearward than the pivot shaft. The fourth shaft is disposed more rearward than the pivot shaft. The rear axle and the fourth shaft are coupled by the rear arm. The rear arm is configured to rotate about the pivot shaft. Therefore, when the rear axle moves upward, the fourth shaft moves upward. When the rear axle moves downward, the fourth shaft moves downward.

The movement of the fourth shaft and the third shaft will be described. The fourth shaft and the third shaft are coupled by the second link member. Therefore, when the fourth shaft moves upward, the third shaft moves upward. When the fourth shaft moves downward, the third shaft moves downward.

The movement of the third shaft and the fifth shaft will be described. The third shaft is disposed more rearward than the second shaft. The fifth shaft is disposed more rearward than the second shaft. The third shaft and the fifth shaft are coupled by the first link member. The first link member is configured to rotate about the second shaft. Therefore, when the third shaft moves upward, the fifth shaft moves upward. When the third shaft moves downward, the fifth shaft moves downward.

The movement of the fifth shaft and the sixth shaft will be described. The fifth shaft and the sixth shaft are coupled by the third link member. Therefore, when the fifth shaft moves upward, the sixth shaft moves upward. When the fifth shaft moves downward, the sixth shaft moves downward.

The movement of the sixth shaft and the pivot shaft will be described. The sixth shaft is disposed more forward than the first shaft. The pivot shaft is disposed more forward than the first shaft. The sixth shaft and the pivot shaft are coupled by the rotating member. The rotating member is configured to rotate about the first shaft. Therefore, when the sixth shaft moves upward, the pivot shaft moves upward. When the sixth shaft moves downward, the pivot shaft moves downward.

In summary, when the rear axle moves upward, the pivot shaft moves upward. When the rear axle moves downward, the pivot shaft moves downward. Consequently, it is easy to reduce the change in the angle of the rear arm.

In the above-described straddled vehicle, it is preferable that
in a side view of the straddled vehicle, a distance between the axis of the pivot shaft and an axis of the sixth shaft is defined as a third distance,
in the side view of the straddled vehicle, a distance between the axis of the sixth shaft and the axis of the first shaft is defined as a fourth distance, and
the third distance is shorter than the fourth distance.

Therefore, when the coupling mechanism rotates the rotating member about the first shaft with respect to the vehicle body frame, a load applied to the coupling mechanism is comparatively small. Consequently, it is easy for the coupling mechanism to rotate the rotating member about the first shaft with respect to the vehicle body frame. Therefore, it is easy for the coupling mechanism to rotate the pivot shaft about the first shaft with respect to the vehicle body frame.

In the above-described straddled vehicle, it is preferable that
a distance between the axis of the sixth shaft and the axis of the first shaft is defined as the fourth distance in the side view of the straddled vehicle, and
the fourth distance is longer than a half of the first distance.

Therefore, when the coupling mechanism rotates the rotating member about the first shaft with respect to the vehicle body frame, a load applied to the coupling mechanism is comparatively small. Consequently, it is easy for the coupling mechanism to rotate the rotating member about the first shaft with respect to the vehicle body frame. Therefore, it is easy for the coupling mechanism to rotate the pivot shaft about the first shaft with respect to the vehicle body frame.

In the above-described straddled vehicle, it is preferable that the sixth shaft is disposed more rearward than the pivot shaft and more forward than the first shaft with regard to the front-rear direction of the straddled vehicle.

Therefore, it is easy to reduce the size of the rotating member.

In the above-described straddled vehicle, it is preferable that
a range in which the sixth shaft is movable is defined as a sixth shaft movable range, and
the sixth shaft movable range is limited to an area more forward than the first shaft with regard to the front-rear direction of the straddled vehicle.

Therefore, it is easy to limit the pivot movable range to an area more forward than the first shaft. Consequently, it is easy to reduce the amount of the second movement of the pivot shaft.

In the above-described straddled vehicle, it is preferable that the pivot movable range is limited more forward than a front end of the sixth shaft movable range.

The pivot movable range does not include more rearward than the front end of the sixth shaft movable range. Therefore, it is easy to reduce the amount of the second movement of the pivot shaft.

In the above-described straddled vehicle, it is preferable that the above-described straddled vehicle includes a rear suspension coupled to the vehicle body frame and the rear arm.

As described above, it is easy to reduce the change in the angle of the rear arm. Therefore, it is easy to adjust the rear suspension. For example, it is easy to improve the ride comfort of the straddled vehicle by setting the rear suspension.

In the above-described straddled vehicle, it is preferable that the rear suspension is coupled to the rear arm via the coupling mechanism.

Therefore, it is easy to couple the rear suspension to the rear arm.

In the above-described straddled vehicle, it is preferable that the rear suspension is coupled to the rear arm via the first link member.

Therefore, it is easy to couple the rear suspension to the rear arm.

In the above-described straddled vehicle, it is preferable that
the above-described straddled vehicle includes:
a seventh shaft supported by the vehicle body frame and extending in the width direction of the straddled vehicle; and
an eighth shaft supported by the first link member and extending in the width direction of the straddled vehicle, and
the rear suspension is coupled to the seventh shaft and the eighth shaft.

Therefore, it is easy to couple the rear suspension to the vehicle body frame and the rear arm.

In the above-described straddled vehicle, it is preferable that
the above-described straddled vehicle includes:
a drive shaft that outputs power; and
a drive mechanism coupled to the drive shaft and the rear wheel and configured to transmit power from the drive shaft to the rear wheel, and
the drive shaft is disposed more forward than the pivot shaft.

The drive shaft outputs power. The drive mechanism is coupled to the drive shaft and the rear wheel. The drive mechanism is configured to transmit power from the drive shaft to the rear wheel. Therefore, it is easy to rotate the rear wheel about the rear axle. As described above, the first distance is 50 mm or more. Therefore, it is easy to reduce the amount of the second movement of the pivot shaft. Consequently, it is easy to reduce the change in a distance between the rear axle and the drive shaft. Therefore, it is easy for the drive mechanism to transmit power from the drive shaft to the rear wheel.

In the above-described straddled vehicle, it is preferable that
the drive mechanism includes a chain coupled to the drive shaft and the rear wheel, and
the above-described straddled vehicle does not include a mechanism that adjusts tension of the chain.

Therefore, the drive mechanism has a simple structure.

In the above-described straddled vehicle, it is preferable that the chain is stretched without using a mechanism that adjusts tension of the chain even when the pivot shaft moves with respect to the vehicle body frame.

That is, the chain is less likely to sag without using the mechanism that adjusts the tension of the chain. Therefore, it is not necessary for the drive mechanism to include the mechanism that adjusts the tension of the chain.

In the above-described straddled vehicle, it is preferable that movement of the coupling mechanism is independent of a change in tension of the chain.

In other words, in the above-described straddled vehicle, it is preferable that the movement of the pivot shaft with respect to the vehicle body frame is independent of the change in the tension of the chain.

Therefore, it is easy to make the coupling mechanism have a simple structure.

### BRIEF DESCRIPTION OF DRAWINGS

Several forms that appear presently preferred are illustrated to describe the present teaching.
Fig. 1 is a left side view of a straddled vehicle according to an embodiment.
Fig. 2 is a left side view illustrating a rear arm and a peripheral mechanism thereof.
Figs. 3A to 3C are schematic diagrams describing operations of the rear arm and the peripheral mechanism thereof.
Fig. 4 is a diagram for describing an angle of the rear arm in the straddled vehicle of the present embodiment.
Fig. 5 is a diagram for describing an angle of a rear arm in a straddled vehicle of a comparative example.
Fig. 6 is a side view of a pivot shaft in the straddled vehicle of the present embodiment.
Fig. 7 is a side view of a drive shaft, a first shaft, the pivot shaft, and a rear axle in the straddled vehicle of the present embodiment.
Fig. 8 is a side view of a drive shaft, a pivot shaft, and a rear axle in the straddled vehicle of the comparative example.

### DETAILED DESCRIPTION

Hereinafter, a straddled vehicle 1 according to the present teaching will be described with reference to the drawings.

### <1. Schematic configuration of straddled vehicle 1>

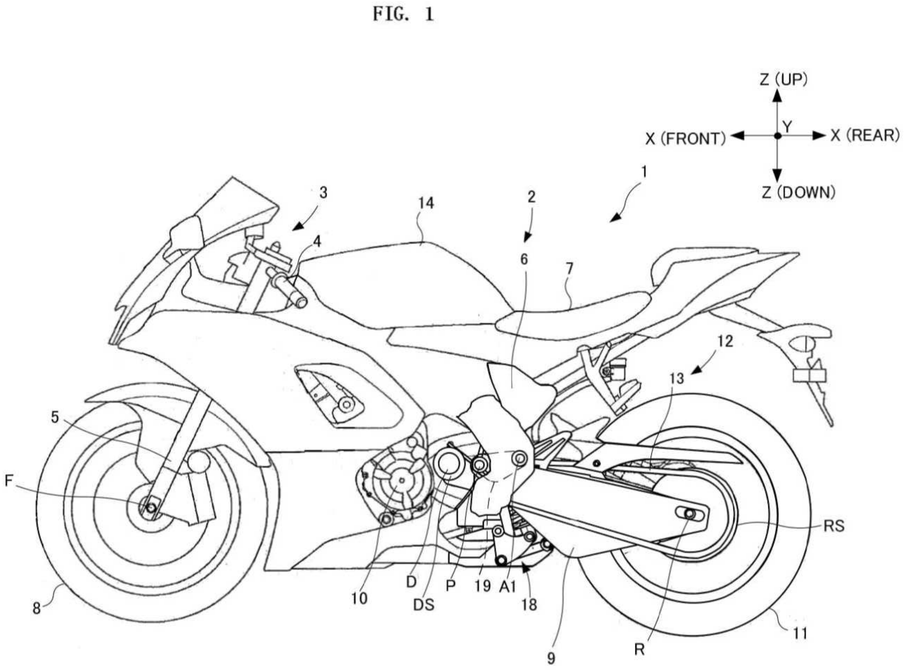

Fig. 1 is a left side view of a straddled vehicle 1 according to an embodiment. A schematic configuration of the straddled vehicle 1 will be described.

Fig. 1 illustrates a front-rear direction X, a width direction Y, and an up-down direction Z of the straddled vehicle 1. The front-rear direction X, the width direction Y, and the up-down direction Z are defined with reference to a driver (also referred to as a rider) riding in the straddled vehicle 1. The front-rear direction X, the width direction Y, and the up-down direction Z are orthogonal to each other. The front-rear direction X and the width direction Y are horizontal. The up-down direction Z is vertical.

"Front", "rear", "upper", "lower", "right", and "left" mean "front", "rear", "upper", "lower", "right", and "left", respectively, for a driver who gets on the straddled vehicle 1. Unless otherwise specified in the present specification, "front" and "rear" include not only a direction parallel to the front-rear direction X but also a direction close to the front-rear direction X. The direction close to the front-rear direction X is, for example, a direction in which the angle formed by the front-rear direction X is 45 degrees or less. Similarly, unless otherwise specified, "right" and "left" include not only a direction parallel to the width direction Y but also a direction close to the width direction Y. Unless otherwise specified, "upper" and "lower" include not only a direction parallel to the up-down direction Z but also a direction close to the up-down direction Z. "Parallel" and "horizontal" include not only parallel and horizontal, but also close to parallel and close to horizontal. Those close to parallel are also referred to as substantially parallel. Those close to horizontal are also referred to as substantially horizontal. In each drawing, FRONT, REAR, UP, and DOWN are appropriately illustrated as reference.

In the present specification, "in a side view of the straddled vehicle 1" is appropriately referred to as "in a vehicle side view". "In a left side view of the straddled vehicle 1" is appropriately referred to as "in a vehicle left side view". "In a plan view of the straddled vehicle 1" is appropriately referred to as "in a vehicle plan view". "In a front view of the straddled vehicle 1" is appropriately referred to as "in a vehicle front view".

The straddled vehicle 1 includes a vehicle body frame 2 and a steering device 3. The vehicle body frame 2 extends in the front-rear direction X. The steering device 3 is supported by a front portion of the vehicle body frame 2. The steering device 3 is rotatable with respect to the vehicle body frame 2.

The steering device 3 includes a handle 4, a front suspension 5, and a front axle F. The handle 4 is disposed on an upper portion of the steering device 3. The front suspension 5 extends downward from the handle 4. The front axle F is disposed below the steering device 3. The front axle F is supported by the front suspension 5. A driver of the straddled vehicle 1 grips the handle 4 and steers the steering device 3.

The straddled vehicle 1 includes a front wheel 8. The front wheel 8 is supported by the steering device 3. Specifically, the front wheel 8 is supported by the front axle F. The front wheel 8 is rotatable about the front axle F.

The vehicle body frame 2 includes a main frame 6. The main frame 6 extends rearward from the front portion of the vehicle body frame 2. More specifically, the main frame 6 extends rearward and downward in a vehicle side view.

The straddled vehicle 1 includes an engine 10. The engine 10 generates power for causing the straddled vehicle 1 to travel. At least a part of the engine 10 is disposed lower than the main frame 6 in a vehicle side view. The engine 10 is disposed more rearward than the steering device 3 and the front wheel 8 in a vehicle side view. The engine 10 is supported by the vehicle body frame 2. For example, the engine 10 is supported by the main frame 6. The engine 10 is fixed to the vehicle body frame 2. The engine 10 does not rock with respect to the vehicle body frame 2.

The straddled vehicle 1 includes a drive shaft D. The drive shaft D outputs power. For example, the drive shaft D is coupled to the engine 10. The engine 10 outputs power to the drive shaft D. The drive shaft D outputs power of the engine 10. Alternatively, the drive shaft D is coupled to a transmission (not illustrated). The transmission is coupled to the engine 10. The transmission outputs power to the drive shaft D.

The straddled vehicle 1 includes a drive sprocket DS. The drive sprocket DS is coupled to the drive shaft D. The drive sprocket DS rotates integrally with the drive shaft D.

The straddled vehicle 1 includes a fuel tank 14. The fuel tank 14 stores fuel. The fuel tank 14 is disposed more rearward than the steering device 3 and the front wheel 8 in a vehicle side view. The fuel tank 14 is disposed higher than the engine 10 in the vehicle side view. At least a part of the fuel tank 14 is disposed higher than the main frame 6 in the vehicle side view. At least a part of the fuel tank 14 is disposed at the same height position as the handle 4 in the vehicle side view. The fuel tank 14 is supported by the vehicle body frame 2.

The straddled vehicle 1 includes a seat 7. The seat 7 is disposed more rearward than the fuel tank 14. At least a part of the seat 7 is disposed at the same height position as the fuel tank 14 in a vehicle side view. The seat 7 is disposed more rearward than the engine 10 and higher than the engine 10. The seat 7 is supported by the vehicle body frame 2.

The driver sits astride the seat 7 and performs a knee grip. The knee grip is to sandwich a part of the straddled vehicle 1 between both legs of the driver. A part of the straddled vehicle 1 is, for example, at least a part of the main frame 6 and the fuel tank 14.

The straddled vehicle 1 includes a pivot shaft P. The pivot shaft P is disposed in the rear of the engine 10. The pivot shaft P is disposed lower than the fuel tank 14 and the seat 7. The pivot shaft P is disposed more rearward than the drive shaft D. The position of the pivot shaft P changes as described later.

The pivot shaft P extends in the width direction Y.

The straddled vehicle 1 includes a rear arm 9. The rear arm 9 is supported by the pivot shaft P. The rear arm 9 extends rearward from the pivot shaft P. The rear arm 9 extends slightly obliquely downward from the pivot shaft P. The rear arm 9 is rockable about the pivot shaft P. The rear arm 9 rotates about the pivot shaft P with respect to the vehicle body frame 2.

The straddled vehicle 1 includes a rear axle R. The rear axle R is supported by the rear arm 9. The rear axle R is supported by a rear portion of the rear arm 9. The rear axle R extends in the width direction Y. The rear axle R is disposed lower than the drive shaft D and the pivot shaft P.

The straddled vehicle 1 includes a rear wheel 11. The rear wheel 11 is supported by the rear axle R. The rear wheel 11 is supported by the rear arm 9 via the rear axle R. The rear wheel 11 is rotatable about the rear axle R.

The straddled vehicle 1 includes a driven sprocket RS. The driven sprocket RS is rotatable about the rear axle R. The driven sprocket RS is coupled to the rear wheel 11. The driven sprocket RS rotates integrally with the rear wheel 11.

The straddled vehicle 1 includes a drive mechanism 12. The drive mechanism 12 is coupled to the drive shaft D and the rear wheel 11. The drive mechanism 12 is configured to transmit power from the drive shaft D to the rear wheel 11. The power transmitted from the drive shaft D to the rear wheel 11 rotates the rear wheel 11 about the rear axle R.

The drive mechanism 12 includes the chain 13. The chain 13 is coupled to the drive shaft D and the rear wheel 11. For example, the chain 13 is wound around the drive sprocket DS and the driven sprocket RS.

The straddled vehicle 1 does not include a mechanism that adjusts the tension of the chain 13.

### <2. First shaft and rotating member>

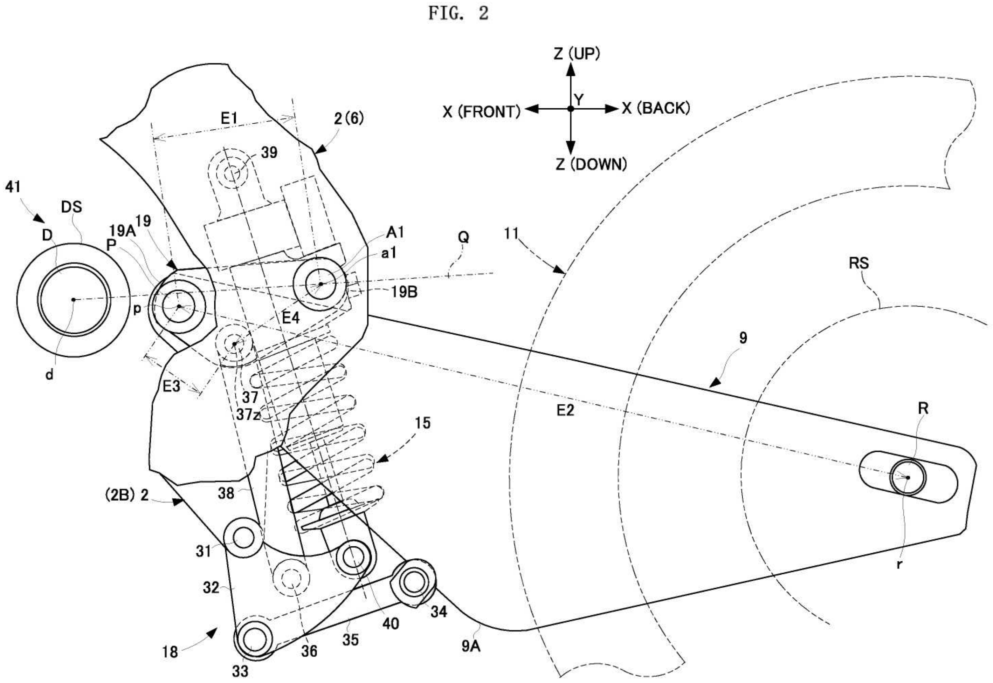

Fig. 2 is a left side view illustrating the rear arm 9 and a peripheral mechanism thereof. Fig. 2 is illustrated in a vehicle left side view.

The straddled vehicle 1 further includes a first shaft A1. The first shaft A1 is supported by the vehicle body frame 2. For example, the first shaft A1 is supported by the main frame 6. The first shaft A1 extends in the width direction Y.

Here, the axis of the first shaft A1 is referred to as an axis a1. The axis of the drive shaft D is referred to as an axis d. The first shaft A1 is located at substantially the same height as the drive shaft D. Comparing the axis a1 with the axis d, the axis a1 is located slightly higher than the axis d.

The position of the first shaft A1 does not change with respect to the vehicle body frame 2. The position of the axis a1 does not change with respect to the vehicle body frame 2.

The position of the drive shaft D does not change with respect to the vehicle body frame 2. The position of the axis d does not change with respect to the vehicle body frame 2.

The straddled vehicle 1 includes a rotating member 19. The rotating member 19 is located inward in the width direction Y from the vehicle body frame 2. At least a part of the rotating member 19 overlaps the vehicle body frame 2 in the vehicle side view.

The rotating member 19 has, for example, an arm shape. The arm shape is a shape extending at least in the front-rear direction X.

The rotating member 19 has an arm shape extending to the front from the first shaft A1. The rotating member 19 has an arm shape extending from the first shaft A1 to the pivot shaft P.

The arm shape is a shape that is not extended rearward from the first shaft A1. The rotating member 19 does not have a disk shape centered on the first shaft A1.

The rotating member 19 includes a front end 19A and a rear end 19B. The front end 19A supports the pivot shaft P. The rear end 19B is supported by the first shaft A1.

The rotating member 19 is supported by the first shaft A1. The rotating member 19 is configured to rotate about the first shaft A1 with respect to the vehicle body frame 2.

The pivot shaft P is supported by the rotating member 19. The pivot shaft P rotates about the first shaft A1 with respect to the vehicle body frame 2.

The rear arm 9 is configured to rotate about the pivot shaft P with respect to the rotating member 19.

The rear arm 9 is located inward in the width direction Y from the vehicle body frame 2 and the rotating member 19. A part of the rear arm 9 overlaps the vehicle body frame 2 and the rotating member 19 in the vehicle side view.

### <3. Coupling mechanism>

The straddled vehicle 1 includes a coupling mechanism 18. The coupling mechanism 18 is coupled to the vehicle body frame 2, the rotating member 19, and the rear arm 9.

The coupling mechanism 18 includes the second shaft 31, the first link member 32, the third shaft 33, the fourth shaft 34, the second link member 35, the fifth shaft 36, the sixth shaft 37, and the third link member 38.

The second shaft 31 is supported by the vehicle body frame 2. For example, the second shaft 31 is supported by the main frame 6. The second shaft 31 extends in the width direction Y.

The position of the second shaft 31 does not change with respect to the vehicle body frame 2.

The first link member 32 is coupled to the second shaft 31.

The first link member 32 is configured to rotate about the second shaft 31 with respect to the vehicle body frame 2.

The third shaft 33 is supported by the first link member 32 and extends in the width direction Y. The third shaft 33 rotates about the second shaft 31. The third shaft 33 rotates with the rotation of the first link member 32.

The fourth shaft 34 is supported by the rear arm 9 and extends in the width direction Y. Specifically, the fourth shaft 34 is supported by a lower side portion 9A of the rear arm 9.

The second link member 35 is coupled to the third shaft 33 and the fourth shaft 34. That is, the second link member 35 couples the first link member 32 and the rear arm 9.

The second link member 35 is configured to rotate about the third shaft 33 with respect to the first link member 32 and rotate about the fourth shaft 34 with respect to the rear arm 9.

The fifth shaft 36 is supported by the first link member 32 and extends in the width direction Y. The fifth shaft 36 rotates about the second shaft 31 with respect to the vehicle body frame 2.

The sixth shaft 37 is supported by the rotating member 19 and extends in the width direction Y.

The third link member 38 is coupled to the fifth shaft 36 and the sixth shaft 37. The third link member 38 couples the first link member 32 and the rotating member 19.

The third link member 38 is configured to rotate about the fifth shaft 36 with respect to the first link member 32. The third link member 38 is configured to rotate about the sixth shaft 37 with respect to the rotating member 19.

The rotating member 19 couples the sixth shaft 37 and the pivot shaft P. The rotating member 19 couples the pivot shaft P and the first shaft A1.

The rotating member 19 is configured to rotate about the sixth shaft 37 with respect to the third link member 38.

The straddled vehicle 1 includes the rear suspension 15. The rear suspension 15 is coupled to the vehicle body frame 2 and the rear arm 9.

The rear suspension 15 is coupled to the rear arm 9 via the coupling mechanism 18.

Specifically, the rear suspension 15 is coupled to the rear arm 9 via the first link member 32.

The straddled vehicle 1 includes a seventh shaft 39 and an eighth shaft 40.

The seventh shaft 39 is supported by the vehicle body frame 2 and extends in the width direction Y. The eighth shaft 40 is supported by the first link member 32 and extends in the width direction Y. The rear suspension 15 is coupled to the seventh shaft 39 and the eighth shaft 40.

The coupling mechanism 18 is not in contact with the chain 13. The coupling mechanism 18 is not a mechanism that adjusts tension of the chain 13. As such, movement of the coupling mechanism 18 is independent of a change in the tension in the chain 13. In other words, the movement of the pivot shaft P with respect to the vehicle body frame 2 is independent of the change in the tension of the chain 13.

### <4. Layout>

Refer to Fig. 2. In the vehicle left side view, the first shaft A1 overlaps the vehicle body frame 2. The first shaft A1 is disposed more rearward than the pivot shaft P in the vehicle left side view. The first shaft A1 is disposed more forward than the rear axle R in the vehicle left side view.

In the vehicle left side view, the pivot shaft P does not overlap the vehicle body frame 2. The pivot shaft P is disposed more forward than the first shaft A1.

The pivot shaft P is located in the vicinity of the front end 19A. The first shaft A1 is located in the vicinity of the rear end 19B. Specifically, the pivot shaft P is located slightly more rearward than the front end 19A. The first shaft A1 is located slightly more forward than the rear end 19B.

The drive shaft D is disposed more forward than the pivot shaft P.

The rear axle R is disposed more rearward than the pivot shaft P.

The second shaft 31 is disposed lower than the first shaft A1.

The third shaft 33 is disposed more rearward than the second shaft 31. The axis of the third shaft 33 is disposed more rearward than the axis of the second shaft 31.

The fourth shaft 34 is disposed more rearward than the pivot shaft P. The fourth shaft 34 is disposed more rearward than the second shaft 31.

The fifth shaft 36 is disposed more rearward than the second shaft 31.

The sixth shaft 37 is disposed more forward than the first shaft A1. The sixth shaft 37 is disposed more rearward than the pivot shaft P.

Here, the axis of the pivot shaft P is referred to as an axis p. The axis p is parallel to the width direction Y. The axis a1 is parallel to the width direction Y. A distance between the axis a1 and the axis p in the vehicle side view is referred to as a first distance E1.

The first distance E1 is 50 mm or more. The first distance E1 is comparatively large.

The axis of the rear axle R is referred to as an axis r. The axis r is parallel to the width direction Y. A distance between the axis p and the axis r in a vehicle side view is defined as a second distance E2.

The second distance E2 is, for example, smaller than or equal to 15 times the first distance E1.

For example, the second distance E2 is equal to or less than 15 times the first distance E1. For example, the second distance E2 is equal to or less than 14 times the first distance E1. For example, the second distance E2 is equal to or less than 13 times the first distance E1.

For example, the second distance E2 is equal to or more than twice the first distance E1. For example, the second distance E2 is equal to or more than three times the first distance E1. For example, the second distance E2 is equal to or more than four times the first distance E1.

The second distance E2 is, for example, 750 mm or less. The second distance E2 is comparatively short.

The axis of the sixth shaft 37 is referred to as an axis 37z. The axis 37z is parallel to the width direction Y. A distance between the axis p and the axis 37z in the vehicle side view is defined as a third distance E3. A distance between the axis 37z and the axis a1 in the vehicle side view is defined as a fourth distance E4.

The third distance E3 is shorter than the fourth distance E4.

The fourth distance E4 is shorter than the first distance E1. The fourth distance E4 is longer than half of the first distance E1.

### <5. Operation>

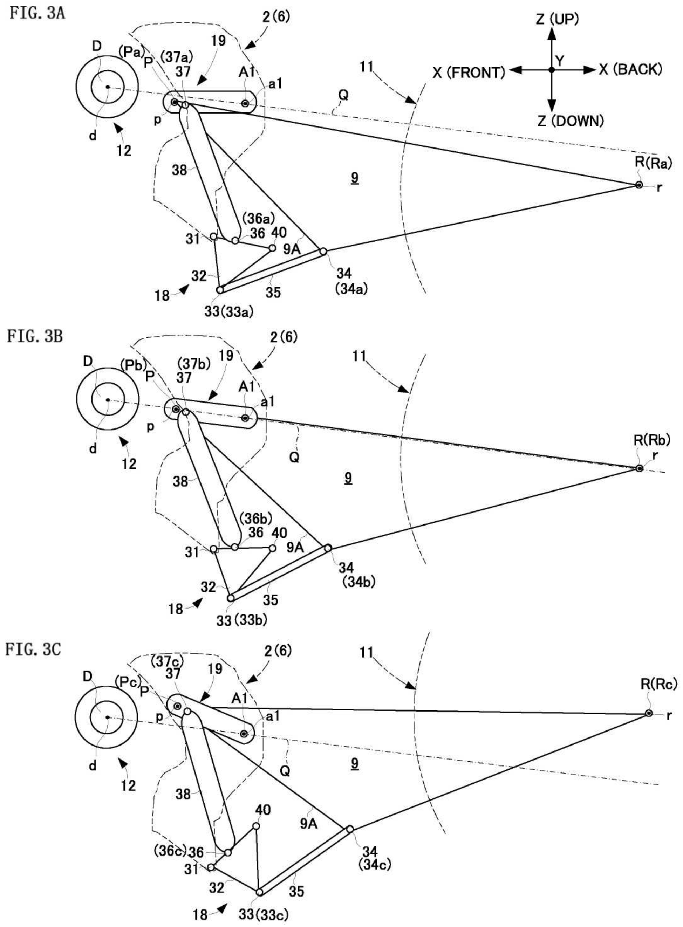

Figs. 3A, 3B, and 3C are left side views of a part of the straddled vehicle 1, respectively. The movement of the rear axle R and the pivot shaft P will be described.

In Figs. 3A, 3B, and 3C, although illustration of the vehicle body frame 2 is omitted, the rear wheel 11 moves with respect to the vehicle body frame 2. The rear axle R also moves with respect to the vehicle body frame 2. When the rear axle R moves with respect to the vehicle body frame 2, the pivot shaft P moves with respect to the vehicle body frame 2.

The rear axle R illustrated in Fig. 3A is referred to as a "rear axle Ra". The rear axle R illustrated in Fig. 3B is referred to as a "rear axle Rb". The rear axle R illustrated in Fig. 3C is referred to as a "rear axle Rc". The rear axle Rb is higher than the rear axle Ra. The rear axle Rc is higher than the rear axle Rb.

The pivot shaft P when the rear axle R is the rear axle Ra is referred to as a "pivot shaft Pa". The pivot shaft P when the rear axle R is the rear axle Rb is referred to as a "pivot shaft Pb". The pivot shaft P when the rear axle R is the rear axle Rc is referred to as a "pivot shaft Pc". The pivot shaft Pb is higher than the pivot shaft Pa. The pivot shaft Pc is lower than the pivot shaft Pb.

Therefore, when the rear axle R moves upward, the pivot shaft P moves upward. When the rear axle R moves downward, the pivot shaft P moves downward.

Figs. 3A, 3B, and 3C illustrate a virtual line Q, respectively. The virtual line Q is a straight line connecting the axis d and the axis a1 in the vehicle side view. The axis d is parallel to the width direction Y.

The rear axle Ra is lower than the virtual line Q in the vehicle side view. The rear axle Rb is on the virtual line Q in the vehicle side view. The rear axle Rc is higher than the virtual line Q in the vehicle side view. The rear axle R extends from a position lower than the virtual line Q to a position higher than the virtual line Q in the vehicle side view.

The pivot shaft Pa is lower than the virtual line Q in the vehicle side view. The pivot shaft Pb is on the virtual line Q in the vehicle side view. The pivot shaft Pc is higher than the virtual line Q in the vehicle side view. The pivot shaft P extends from a position lower than the virtual line Q to a position higher than the virtual line Q in the vehicle side view.

When the rear axle R is higher than the virtual line Q, the pivot shaft P is also higher than the virtual line Q. When the rear axle R is on the virtual line Q, the pivot shaft P is also on the virtual line Q. When the rear axle R is lower than the virtual line Q, the pivot shaft P is also lower than the virtual line Q.

The operation of the coupling mechanism 18 will be described. When the rear axle R moves with respect to the vehicle body frame 2, the coupling mechanism 18 moves the pivot shaft P with respect to the vehicle body frame 2.

Specifically, when the rear axle R moves with respect to the vehicle body frame 2, the rear arm 9 rotates about the pivot shaft P with respect to the rotating member 19. When the rear arm 9 rotates about the pivot shaft P with respect to the rotating member 19, the rear arm 9 moves with respect to the vehicle body frame 2. When the rear arm 9 moves with respect to the vehicle body frame 2, the coupling mechanism 18 rotates the rotating member 19 about the first shaft A1 with respect to the vehicle body frame 2. When the coupling mechanism 18 rotates the rotating member 19 about the first shaft A1 with respect to the vehicle body frame 2, the pivot shaft P rotates about the first shaft A1 with respect to the vehicle body frame 2.

For example, when the rear axle R moves upward with respect to the vehicle body frame 2, the coupling mechanism 18 moves the pivot shaft P upward with respect to the vehicle body frame 2.

For example, when the rear axle R moves downward with respect to the vehicle body frame 2, the coupling mechanism 18 moves the pivot shaft P downward with respect to the vehicle body frame 2.

Operations of the third shaft 33, the fourth shaft 34, the fifth shaft 36, and the sixth shaft 37 will be described.

The third shaft 33 when the rear axle R is the rear axle Ra is referred to as a "third shaft 33a". The third shaft 33 when the rear axle R is the rear axle Rb is referred to as a "third shaft 33b". The third shaft 33 when the rear axle R is the rear axle Rc is referred to as a "third shaft 33c". The third shaft 33b is higher than the third shaft 33a. The third shaft 33c is higher than the third shaft 33b.

Similarly, the fourth shaft 34 when the rear axle R is the rear axle Ra, Rb, or Rc is referred to as a "fourth shaft 34a", a "fourth shaft 34b", or a "fourth shaft 34c", respectively. The fourth shaft 34b is higher than the fourth shaft 34a. The fourth shaft 34c is higher than the fourth shaft 34b.

The fifth shaft 36 when the rear axle R is the rear axle Ra, Rb, or Rc is referred to as a "fifth shaft 36a", a "fifth shaft 36b", or a "fifth shaft 36c", respectively. The fifth shaft 36b is higher than the fifth shaft 36a. The fifth shaft 36c is higher than the fifth shaft 36b.

The sixth shaft 37 when the rear axle R is the rear axle Ra, Rb, or Rc is referred to as a "sixth shaft 37a", a "sixth shaft 37b", or a "sixth shaft 37c", respectively. The sixth shaft 37b is higher than the sixth shaft 37a. The sixth shaft 37c is higher than the sixth shaft 37b.

Therefore, when the rear axle R moves upward, the third shaft 33, the fourth shaft 34, the fifth shaft 36, and the sixth shaft 37 each move upward. When the rear axle R moves downward, the third shaft 33, the fourth shaft 34, the fifth shaft 36, and the sixth shaft 37 each move downward.

The operation of the coupling mechanism 18 when the rear axle R moves upward will be described in detail.

When the rear axle R moves upward with respect to the vehicle body frame 2, the rear axle R rotates counterclockwise about the pivot shaft P in the vehicle left side view.

Moreover, when the rear axle R moves upward with respect to the vehicle body frame 2, the fourth shaft 34 moves upward with respect to the vehicle body frame 2.

When the fourth shaft 34 moves upward with respect to the vehicle body frame 2, the second link member 35 moves upward with respect to the vehicle body frame 2.

When the second link member 35 moves upward with respect to the vehicle body frame 2, the third shaft 33 moves upward with respect to the vehicle body frame 2. Specifically, the third shaft 33 rotates counterclockwise about the second shaft 31 with respect to the vehicle body frame 2 in the vehicle left side view.

When the third shaft 33 moves upward with respect to the vehicle body frame 2, the first link member 32 rotates counterclockwise about the second shaft 31 with respect to the vehicle body frame 2 in the vehicle left side view.

When the first link member 32 rotates counterclockwise about the second shaft 31 with respect to the vehicle body frame 2 in the vehicle left side view, the fifth shaft 36 moves upward with respect to the vehicle body frame 2. Specifically, the fifth shaft 36 rotates counterclockwise about the second shaft 31 with respect to the vehicle body frame 2 in the vehicle left side view.

When the fifth shaft 36 moves upward with respect to the vehicle body frame 2, the third link member 38 moves upward with respect to the vehicle body frame 2.

When the third link member 38 moves upward with respect to the vehicle body frame 2, the sixth shaft 37 moves upward with respect to the vehicle body frame 2.

When the sixth shaft 37 moves upward with respect to the vehicle body frame 2, the rotating member 19 rotates clockwise about the first shaft A1 with respect to the vehicle body frame 2 in the vehicle left side view.

When the rotating member 19 rotates clockwise about the first shaft A1 with respect to the vehicle body frame 2 in the vehicle left side view, the pivot shaft P moves upward with respect to the vehicle body frame 2. Specifically, the pivot shaft P rotates clockwise about the first shaft A1 with respect to the vehicle body frame 2 in the vehicle left side view.

In summary, when the rear axle R moves upward, the pivot shaft P moves upward. When the rear axle R rotates counterclockwise about the pivot shaft P in the vehicle left side view, the pivot shaft P rotates clockwise about the first shaft A1.

The operation of the coupling mechanism 18 when the rear axle R moves downward will be described in detail.

When the rear axle R moves downward with respect to the vehicle body frame 2, the rear axle R rotates clockwise about the pivot shaft P in the vehicle left side view. Moreover, when the rear axle R moves downward with respect to the vehicle body frame 2, the fourth shaft 34 moves downward with respect to the vehicle body frame 2.

When the fourth shaft 34 moves downward with respect to the vehicle body frame 2, the second link member 35 moves downward with respect to the vehicle body frame 2.

When the second link member 35 moves downward with respect to the vehicle body frame 2, the third shaft 33 moves downward with respect to the vehicle body frame 2. Specifically, the third shaft 33 rotates clockwise about the second shaft 31 with respect to the vehicle body frame 2 in the vehicle left side view.

When the third shaft 33 moves downward with respect to the vehicle body frame 2, the first link member 32 rotates clockwise about the second shaft 31 with respect to the vehicle body frame 2 in the vehicle left side view.

When the first link member 32 rotates clockwise about the second shaft 31 with respect to the vehicle body frame 2 in the vehicle left side view, the fifth shaft 36 moves downward with respect to the vehicle body frame 2. Specifically, the fifth shaft 36 rotates clockwise about the second shaft 31 with respect to the vehicle body frame 2 in the vehicle left side view.

When the fifth shaft 36 moves downward with respect to the vehicle body frame 2, the third link member 38 moves downward with respect to the vehicle body frame 2.

When the third link member 38 moves downward with respect to the vehicle body frame 2, the sixth shaft 37 moves downward with respect to the vehicle body frame 2.

When the sixth shaft 37 moves downward with respect to the vehicle body frame 2, the rotating member 19 rotates counterclockwise about the first shaft A1 with respect to the vehicle body frame 2 in the vehicle left side view.

When the rotating member 19 rotates counterclockwise about the first shaft A1 with respect to the vehicle body frame 2 in the vehicle left side view, the pivot shaft P moves downward with respect to the vehicle body frame 2. Specifically, the pivot shaft P rotates counterclockwise about the first shaft A1 with respect to the vehicle body frame 2 in the vehicle left side view.

In summary, when the rear axle R moves downward, the pivot shaft P moves downward. When the rear axle R rotates clockwise about the pivot shaft P in the vehicle left side view, the pivot shaft P rotates counterclockwise about the first shaft A1.

### <6. Change in angle of rear arm>

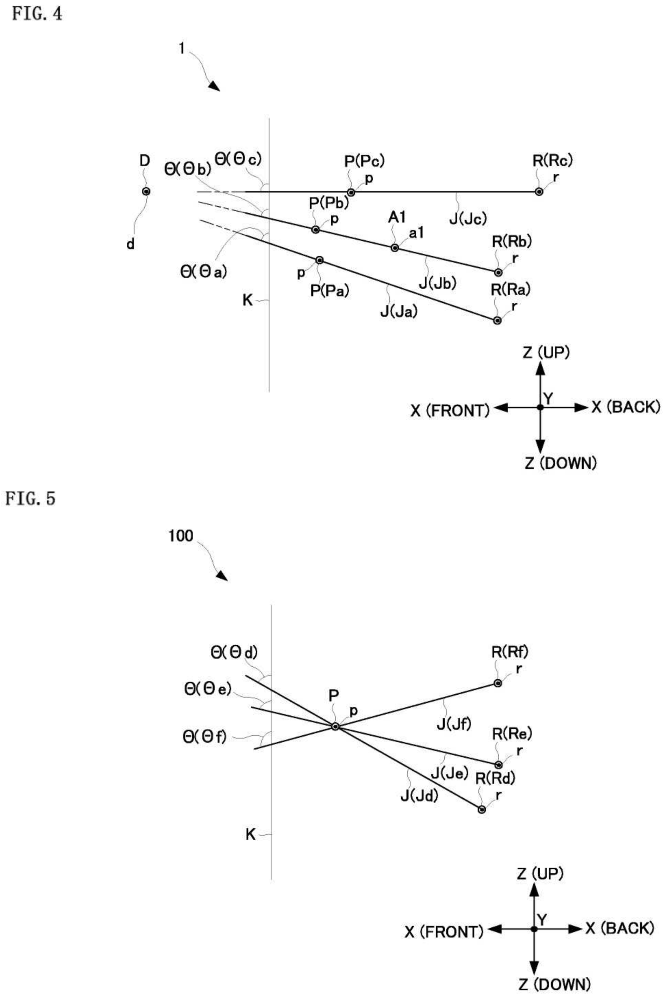

Fig. 4 is a diagram for describing an angle of the rear arm 9 in the straddled vehicle 1 of the present embodiment. Fig. 4 illustrates the drive shaft D, the first shaft A1, the rear axle R, and the pivot shaft P. Fig. 4 illustrates the rear axles Ra, Rb, and Rc as the rear axles R. Fig. 4 illustrates the pivot shafts Pa, Pb, and Pc as the pivot shafts P. Note that, in Fig. 4, illustration of the vehicle body frame 2 and the rear arm 9 is omitted.

Fig. 4 illustrates an axis J of the rear arm 9. The axis J is a virtual line connecting the axis p of the pivot shaft P and the axis r of the rear axle R in the vehicle side view.

When the rear axle R moves with respect to the vehicle body frame 2, a position of the axis J changes with respect to the vehicle body frame 2.

The axis J when the rear axle R is the rear axle Ra is referred to as an "axis Ja". The axis J when the rear axle R is the rear axle Rb is referred to as an "axis Jb". The axis J when the rear axle R is the rear axle Rc is referred to as an "axis Jc".

When the pivot shaft P moves with respect to the vehicle body frame 2, the position of the axis J changes with respect to the vehicle body frame 2. The axis Ja is an axis J when the pivot shaft P is the pivot shaft Pa. The axis Jb is an axis J when the pivot shaft P is the pivot shaft Pb. The axis Jc is an axis J when the pivot shaft P is the pivot shaft Pc.

Fig. 4 illustrates an angle Θ of the rear arm 9. The angle Θ is, for example, an angle between the axis J and a reference line K in the vehicle side view.

The reference line K is, for example, parallel to the up-down direction Z. When the rear axle R moves with respect to the vehicle body frame 2, a position of the reference line K does not change with respect to the vehicle body frame 2. When the pivot shaft P moves with respect to the vehicle body frame 2, the position of the reference line K does not change with respect to the vehicle body frame 2.

When the rear axle R moves with respect to the vehicle body frame 2, the angle Θ changes.

The angle Θ when the rear axle R is the rear axle Ra is referred to as an "angle Θa". The angle Θ when the rear axle R is the rear axle Rb is referred to as an "angle Ob". The angle Θ when the rear axle R is the rear axle Rc is referred to as an "angle Θc".

When the pivot shaft P moves with respect to the vehicle body frame 2, the angle Θ changes.

The angle Θa is an angle Θ when the pivot shaft P is the pivot shaft Pa. The angle Θb is an angle Θ when the pivot shaft P is the pivot shaft Pb. The angle Θc is an angle Θ when the pivot shaft P is the pivot shaft Pc.

A difference between the angle Θa and the angle Θb is comparatively small. When the rear axle R moves between the rear axle Ra and the rear axle Rb, the change in the angle Θ is small.

A difference between the angle Θb and the angle Θc is comparatively small. When the rear axle R moves between the rear axle Rb and the rear axle Rc, the change in the angle Θ is small.

Fig. 5 is a diagram for describing an angle of the rear arm in a straddled vehicle 100 of a comparative example. The straddled vehicle 100 of the comparative example includes a vehicle body frame (not illustrated) and a rear arm (not illustrated). The straddled vehicle 100 includes a pivot shaft P and a rear axle R. In the straddled vehicle 100, a position of the pivot shaft P does not change with respect to the vehicle body frame. In the straddled vehicle 100, a position of the rear axle R changes with respect to the vehicle body frame. In the straddled vehicle 100, the rear axle R rotates about the pivot shaft P with respect to the vehicle body frame.

Fig. 5 illustrates rear axles Rd, Re, and Rf as the rear axles R. The rear axle Re is higher than the rear axle Rd. The rear axle Rf is higher than the rear axle Re.

The rear arm of the straddled vehicle 100 extends from the pivot shaft P to the rear axle R. The rear arm of the straddled vehicle 100 has an axis J.

In the straddled vehicle 100, when the rear axle R moves with respect to the vehicle body frame, a position of the axis J changes with respect to the vehicle body frame 2.

The axis J when the rear axle R is the rear axle Rd is referred to as an "axis Jd". The axis J when the rear axle R is the rear axle Re is referred to as an "axis Je". The axis J when the rear axle R is the rear axle Rf is referred to as an "axis Jf".

The rear arm of the straddled vehicle 100 has an angle Θ.

In the straddled vehicle 100, the angle Θ changes when the rear axle R moves with respect to the vehicle body frame.

The angle Θ when the rear axle R is the rear axle Rd is referred to as an "angle Θd". The angle Θ when the rear axle R is the rear axle Re is referred to as the "angle Θe". The angle Θ when the rear axle R is the rear axle Rf is referred to as an "angle Of".

A difference between the angle Θd and the angle Θe is comparatively large. For example, the difference between the angle Θd and the angle Θe is greater than the difference between the angle Θa and the angle Θb.

A difference between the angle Θe and the angle Θf is comparatively large. For example, the difference between the angle Θe and the angle Θf is greater than the difference between the angle Θb and the angle Θc.

In a case where the rear axle R moves with respect to the vehicle body frame, the change in the angle Θ of the straddled vehicle 1 is smaller than the change in the angle Θ of the straddled vehicle 100.

For example, in a case where the rear axle R moves upward with respect to the vehicle body frame, the change in the angle Θ of the straddled vehicle 1 is smaller than the change in the angle Θ of the straddled vehicle 100.

For example, in a case where the rear axle R moves downward with respect to the vehicle body frame 2, the change in the angle Θ of the straddled vehicle 1 is smaller than the change in the angle Θ of the straddled vehicle 100.

This point will be described in more detail. In the straddled vehicle 100, the position of the pivot shaft P does not change. Therefore, in the straddled vehicle 100, the axis J of the rear arm is inclined about the pivot shaft P. Therefore, in the straddled vehicle 100, a change in the inclination of the axis J of the rear arm about the pivot shaft P is large. In the straddled vehicle 100, the angle Θ is the inclination of the axis J of the rear arm about the pivot shaft P. Therefore, in the straddled vehicle 100, the axis J of the rear arm is greatly inclined according to the movement of the rear axle R. Consequently, when the rear axle R moves with respect to the vehicle body frame, the change in the angle Θ of the straddled vehicle 100 is large.

On the other hand, for the rear arm 9 of the straddled vehicle 1, when the rear axle R moves upward, the pivot shaft P moves upward. Therefore, for example, the axis Ja and the axis Jb are parallel or nearly parallel. For example, the angle Θa and the angle Θb are equal or approximate to each other. The angle Θb and the angle Θc are equal or approximate to each other. Therefore, even when the rear axle R moves with respect to the vehicle body frame 2, the change in the angle Θ of the straddled vehicle 1 is small.

### <7. Pivot movable range>

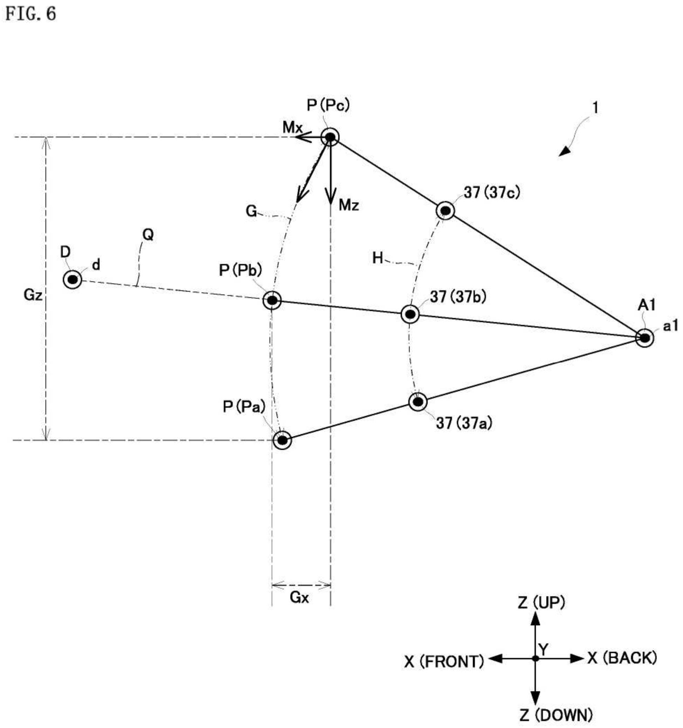

Fig. 6 is a side view of the pivot shaft P in the straddled vehicle 1 of the present embodiment. Fig. 6 illustrates the pivot axes Pa, Pb, and Pc as the pivot axes P.

Hereinafter, a range in which the pivot shaft P is movable is referred to as a pivot movable range G. The pivot movable range G is a part on a circumference centered on the first shaft A1. In other words, the pivot movable range G is an arc centered on the first shaft A1. When the pivot shaft P rotates about the first shaft A1 with respect to the vehicle body frame 2, the pivot shaft P moves within the pivot movable range G.

The pivot axes Pa, Pb, Pc are each located on the pivot movable range G.

The pivot movable range G is limited to, for example, an area more forward than the first shaft A1. **In** other words, the entire pivot movable range G is disposed in the area more forward than the first shaft A1.

Each of the pivot shafts Pa, Pb, and Pc is located more forward than the first shaft A1 in the vehicle side view.

The pivot movable range G extends from a position higher than the virtual line Q to a position lower than the virtual line Q in the vehicle side view. As described above, the virtual line Q is a virtual line connecting the axis d of the drive shaft D and the axis a1 of the first shaft A1 in the vehicle side view.

The pivot shaft Pa is located lower than the virtual line Q in the vehicle side view. The pivot shaft Pc is located higher than the virtual line Q in the vehicle side view.

Fig. 6 illustrates a first length Gz and a second length Gx. The first length Gz is a length of the pivot movable range G in the up-down direction Z. The first length PA1 corresponds to an upper limit value of the amount of the first movement Mz of the pivot shaft P. The second length Gx is a length of the pivot movable range G in the front-rear direction X. The second length PA2 corresponds to an upper limit value of the amount of the second movement Mx of the pivot shaft P. The second length Gx is shorter than the first length Gz.

For example, the pivot shaft Pa is a lower end of the pivot movable range G. The pivot shaft Pc is an upper end of the pivot movable range G. The first length Gz corresponds to a distance between the pivot shaft Pa and the pivot shaft Pc in the up-down direction Z.

The rotation of the pivot shaft P about the first shaft A1 with respect to the vehicle body frame 2 is decomposed into the first movement Mz of the pivot shaft P and the second movement Mx of the pivot shaft P. The first movement Mz is a movement of the pivot shaft P with respect to the vehicle body frame 2 in the up-down direction Z. The second movement Mx is a movement of the pivot shaft P with respect to the vehicle body frame 2 in the front-rear direction X.

As described above, the first length Gz is longer than the second length Gx. Therefore, it is easy to increase the amount of the first movement Mz. For example, it is easy to make the amount of the first movement Mz larger than the amount of the second movement Mx. Consequently, when the rear axle R moves with respect to the vehicle body frame 2, it is easy to reduce the change in the angle Θ of the rear arm 9.

As described above, the second length Gx is shorter than the first length Gz. Therefore, it is easy to reduce the amount of the second movement Mx. For example, it is easy to make the amount of the second movement Mx smaller than the amount of the first movement Mz. Therefore, when the rear axle R moves with respect to the vehicle body frame 2, it is easy to suppress the amount of the second movement Mx.

Fig. 6 illustrates the sixth shaft 37. Fig. 6 illustrates sixth shafts 37a, 37b, and 37c as the sixth shafts 37.

Hereinafter, a range in which the sixth shaft 37 is movable is referred to as a sixth shaft movable range H. The sixth shaft movable range H is a part on a circumference centered on the first shaft A1. **In** other words, the sixth shaft movable range H is an arc centered on the first shaft A1. When the sixth shaft 37 rotates about the first shaft A1 with respect to the vehicle body frame 2, the sixth shaft 37 moves within the sixth shaft movable range H.

Each of the sixth shafts 37a, 37b, and 37c is located on the sixth shaft movable range H.

The sixth shaft movable range H is similar to the pivot movable range G. The sixth shaft movable range H is smaller than the pivot movable range G. A radius of the sixth shaft movable range H is smaller than a radius of the pivot movable range G.

The sixth shaft movable range H is limited to an area more forward than the first shaft A1. In other words, the entire sixth shaft movable range H is disposed in the area more forward than the first shaft A1.

Each of the sixth shafts 37a, 37b, and 37c is located more forward than the first shaft A1 in the vehicle side view.

The sixth shaft movable range H extends from a position higher than the virtual line Q to a position lower than the virtual line Q in the vehicle side view.

The sixth shaft 37a is located lower than the virtual line Q in the vehicle side view. The sixth shaft 37c is located higher than the virtual line Q in the vehicle side view.

For example, the sixth shaft 37a is a lower end of the sixth shaft movable range H. The sixth shaft 37c is an upper end of the sixth shaft movable range H.

The sixth shaft movable range H is disposed more rearward than the pivot movable range G.

The pivot movable range G is disposed more forward than the first shaft A1 and more forward than the sixth shaft movable range H.

The pivot movable range G is limited more forward than the front end of the sixth shaft movable range H. In other words, the pivot movable range G is disposed completely more forward than the sixth shaft movable range H.

The pivot movable range G does not include more rearward than the front end of the sixth shaft movable range H. Therefore, it is easy to reduce the amount of the second movement Mx of the pivot shaft P.

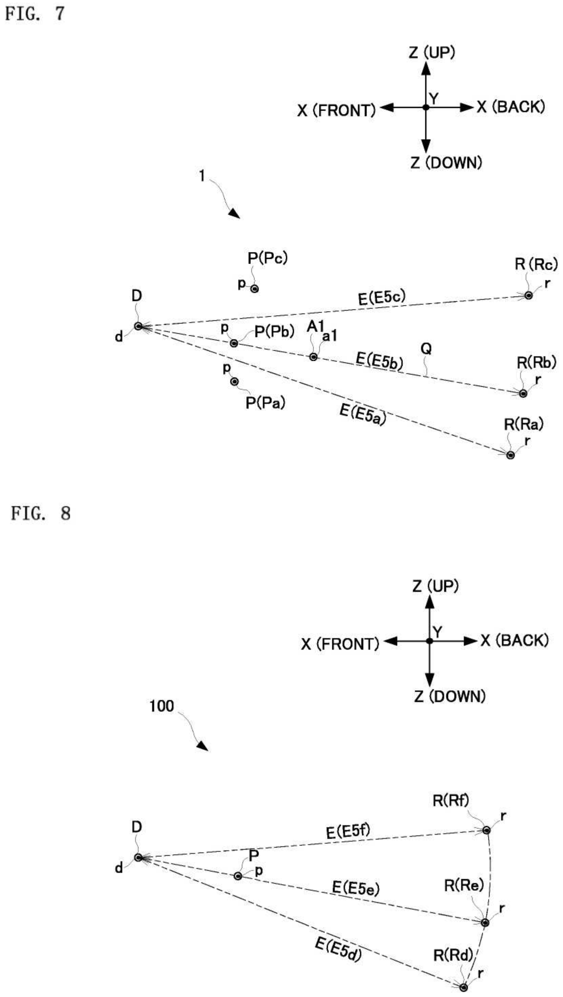

Fig. 7 is a side view of the drive shaft D, the first shaft A1, the pivot shaft P, and the rear axle R in the straddled vehicle 1 according to the embodiment. Fig. 7 illustrates the pivot axes Pa, Pb, and Pc as the pivot axes P. Fig. 7 illustrates the rear axles Ra, Rb, and Rc as the rear axles R.

Fig. 7 illustrates a fifth distance E5. The fifth distance E5 is a distance between the drive shaft D and the rear axle R in the vehicle side view. For example, the fifth distance E5 is a distance between the axis d of the drive shaft D and the axis r of the rear axle R in the vehicle side view.

Although the drive mechanism 12 is not illustrated in Fig. 7, the fifth distance E5 corresponds to a length of the drive mechanism 12.

The fifth distance E5 corresponds to a "distance between the drive shaft and the rear axle" of the present teaching.

When the rear axle R moves with respect to the vehicle body frame 2, the fifth distance E5 changes.

The fifth distance E5 when the rear axle R is the rear axle Ra is referred to as a "fifth distance E5a". The fifth distance E5 when the rear axle R is the rear axle Rb is referred to as a "fifth distance E5b". The fifth distance E5 when the rear axle R is the rear axle Rc is referred to as a "fifth distance E5c".

The fifth distance E5a is a fifth distance E5 when the rear axle R is located lower than the virtual line Q in the vehicle side view. The fifth distance E5b is a fifth distance E5 when the rear axle R is located on the virtual line Q in the vehicle side view. The fifth distance E5c is a fifth distance E5 when the rear axle R is located higher than the virtual line Q in the vehicle side view.

When the pivot shaft P moves with respect to the vehicle body frame 2, the fifth distance E5 changes.

The fifth distance E5a is a fifth distance E5 when the pivot shaft P is the pivot shaft Pa. The fifth distance E5b is a fifth distance E5 when the pivot shaft P is the pivot shaft Pb. The fifth distance E5c is a fifth distance E5 when the pivot shaft P is the pivot shaft Pc.

The fifth distance E5a is a fifth distance E5 when the pivot shaft P is located lower than the virtual line Q in the vehicle side view. The fifth distance E5b is a fifth distance E5 when the pivot shaft P is located on the virtual line Q in the vehicle side view. The fifth distance E5c is a fifth distance E5 when the pivot shaft P is located higher than the virtual line Q in the vehicle side view.

The fifth distance E5a is a fifth distance E5 when the pivot shaft P and the rear axle R are located lower than the virtual line Q in the vehicle side view. The fifth distance E5b is a fifth distance E5 when the pivot shaft P and the rear axle R are located on the virtual line Q in the vehicle side view. The fifth distance E5c is a fifth distance E5 when the pivot shaft P and the rear axle R are located higher than the virtual line Q in the vehicle side view.

As described above, when the rear axle R moves with respect to the vehicle body frame 2, the amount of the second movement Mx is small. Therefore, when the rear axle R moves with respect to the vehicle body frame 2, the change in the fifth distance E5 is small. For example, a difference between the fifth distance E5a and the fifth distance E5b is small. For example, a difference between the fifth distance E5b and the fifth distance E5c is small. Consequently, in the straddled vehicle 1, the chain 13 is hardly bent. For example, the chain 13 is less likely to sag without using a mechanism that adjusts the tension of the chain 13. Even when the pivot shaft P moves with respect to the vehicle body frame 2, the chain 13 is stretched without using the mechanism that adjusts the tension of the chain 13. Therefore, the drive mechanism 12 has a simple structure.

The fifth distance E5b is shorter than the fifth distance E5a.

The fifth distance E5b is shorter than the fifth distance E5c.

Among the fifth distances E5a, E5b, and E5c, the fifth distance E5b is the shortest. Therefore, when the pivot shaft P is located higher than the virtual line Q or lower than the virtual line Q in the vehicle side view, the chain 13 is hardly loosened. When the pivot shaft P and the rear axle R are located higher than the virtual line Q or lower than the virtual line Q in the vehicle side view, respectively, the chain 13 is hardly loosened.

For example, the chain 13 is tensioned such that the chain 13 has an appropriate tension when the fifth distance E5 is the fifth distance E5b. Therefore, when the pivot shaft P is located on the virtual line Q in the vehicle side view, the chain 13 is hardly loosened. When the pivot shaft P and the rear axle R are each located on the virtual line Q in the vehicle side view, the chain 13 is hardly loosened.

Fig. 8 is a side view of the drive shaft D, the pivot shaft P, and the rear axle R in the straddled vehicle 100 of the comparative example. As described above, the straddled vehicle 100 of the comparative example includes the vehicle body frame (not illustrated). The straddled vehicle 100 includes the drive shaft D, the pivot shaft P, and the rear axle R. In the straddled vehicle 100, a position of the drive shaft D does not change with respect to the vehicle body frame. In the straddled vehicle 100, a position of the pivot shaft P does not change with respect to the vehicle body frame. In the straddled vehicle 100, a position of the rear axle R changes with respect to the vehicle body frame. In the straddled vehicle 100, the rear axle R rotates about the pivot shaft P with respect to the vehicle body frame.

Fig. 8 illustrates rear axles Rd, Re, and Rf as the rear axles R. The rear axle Re is higher than the rear axle Rd. The rear axle Rf is higher than the rear axle Re.

Fig. 8 illustrates a fifth distance E5. The fifth distance E5 is a distance between the drive shaft D and the rear axle R in the vehicle side view.

In the straddled vehicle 100, the fifth distance E5 changes when the rear axle R moves with respect to the vehicle body frame 2.

The fifth distance E5 when the rear axle R is the rear axle Rd is referred to as a "fifth distance E5d". The fifth distance E5 when the rear axle R is the rear axle Re is referred to as a "fifth distance E5e". The fifth distance E5 when the rear axle R is the rear axle Rf is referred to as a "fifth distance E5f".

As described above, in the straddled vehicle 1, the amount of the second movement Mx is small when the rear axle R moves with respect to the vehicle body frame 2. Therefore, when the rear axle R moves with respect to the vehicle body frame 2, the amount of change in the fifth distance E5 of the straddled vehicle 1 is smaller than the amount of change in the fifth distance E5 of the straddled vehicle 100. For example, the difference between the fifth distance E5a and the fifth distance E5b is smaller than the difference between the fifth distance E5d and the fifth distance E5e. For example, the difference between the fifth distance E5b and the fifth distance E5c is smaller than the difference between the fifth distance E5e and the fifth distance E5f.

The fifth distance E5e is longer than the fifth distance E5d.

The fifth distance E5e is shorter than the fifth distance E5f.

Among the fifth distances E5d, E5e, and E5f, the fifth distance E5e is the longest.

### <8. Effects of embodiment>

As described above, according to the present embodiment, the straddled vehicle 1 includes the vehicle body frame 2, the first shaft A1, the rotating member 19, the pivot shaft P, the rear arm 9, the rear axle R, the rear wheel 11, and the coupling mechanism 18. The first shaft A1 is supported by the vehicle body frame 2. The first shaft A1 extends in the width direction Y. The rotating member 19 is supported by the first shaft A1. The rotating member 19 is configured to rotate about the first shaft A1 with respect to the vehicle body frame 2. The pivot shaft P is supported by the rotating member 19. The pivot shaft P extends in the width direction Y. The rear arm 9 is supported by the pivot shaft P. The rear arm 9 is configured to rotate about the pivot shaft P with respect to the rotating member 19. The rear axle R is supported by the rear arm 9. The rear axle R extends in the width direction Y. The rear wheel 11 is supported by the rear axle R. The coupling mechanism 18 is coupled to the vehicle body frame 2, the rotating member 19, and the rear arm 9.

Therefore, when the rear axle R moves with respect to the vehicle body frame 2, the rear arm 9 rotates about the pivot shaft P with respect to the rotating member 19, and the coupling mechanism 18 rotates the rotating member 19 about the first shaft A1 with respect to the vehicle body frame 2. When the rotating member 19 rotates about the first shaft A1 with respect to the vehicle body frame 2, the pivot shaft P rotates about the first shaft A1 with respect to the vehicle body frame 2. In summary, when the rear axle R moves with respect to the vehicle body frame 2, the pivot shaft P moves with respect to the vehicle body frame 2. Therefore, it is easy to reduce the change in the angle Θ of the rear arm 9.

In the vehicle side view, the first distance E1 is 50 mm or more. The first distance E1 is a distance between the axis a1 of the first shaft A1 and the axis p of the pivot shaft P. As described above, the first distance E1 is comparatively large. Therefore, even when the pivot shaft P moves with respect to the vehicle body frame 2, it is easy to reduce the amount of the second movement Mx of the pivot shaft P. Consequently, it is easy to transmit power from the drive shaft D to the rear wheel 11.

In summary, in the straddled vehicle 1, it is easy to reduce the change in the angle Θ of the rear arm 9. Moreover, in the straddled vehicle 1, it is easy to reduce the amount of the second movement Mx of the pivot shaft P.

Note that the angle Θ of the rear arm 9 is, for example, an angle between the axis J of the rear arm 9 and the reference line K in the vehicle side view. The axis J of the rear arm is a virtual line connecting the axis p of the pivot shaft P and the axis r of the rear axle R in the vehicle side view. The reference line K is, for example, parallel to the up-down direction Z.

The second movement Mx of the pivot shaft P is the movement of the pivot shaft P with respect to the vehicle body frame 2 in the front-rear direction X.

In the vehicle side view, the first shaft A1 overlaps the vehicle body frame 2. Therefore, it is easy for the vehicle body frame 2 to support the first shaft A1.

In the vehicle side view, the pivot shaft P does not overlap the vehicle body frame 2. Therefore, it is easy to set the first distance E1 to 50 mm or more.

The first shaft A1 is disposed more rearward than the pivot shaft P in the vehicle side view. The first shaft A1 is disposed more forward than the rear axle R in the vehicle side view. Therefore, the first shaft A1 is disposed at an appropriate position with respect to the pivot shaft P. The first shaft A1 is disposed at an appropriate position with respect to the rear axle R. Consequently, the pivot shaft P is disposed at an appropriate position with respect to the rear axle R.

The pivot movable range G is limited to an area more forward than the first shaft A1. The pivot movable range G is a range in which the pivot shaft P is movable. In other words, the entire pivot movable range G is disposed in the area more forward than the first shaft A1. Therefore, it is easy to reduce the amount of the second movement Mx of the pivot shaft P.

The drive shaft D is disposed more forward than the pivot shaft P. The pivot movable range G extends from a position higher than the virtual line Q to a position lower than the virtual line Q in the vehicle side view. The virtual line Q is a virtual line connecting the drive shaft D and the first shaft A1. Therefore, it is easy to increase the amount of the first movement Mz of the pivot shaft P. Consequently, it is easy to reduce the change in the angle Θ of the rear arm 9.

The fifth distance E5b is shorter than the fifth distances E5a and E5c. The fifth distance E5a is a fifth distance E5 when the pivot shaft P is located lower than the virtual line Q in the vehicle side view. The fifth distance E5b is a fifth distance E5 when the pivot shaft P is located on the virtual line Q in the vehicle side view. The fifth distance E5c is a fifth distance E5 when the pivot shaft P is located higher than the virtual line Q in the vehicle side view. The fifth distance E5 is a distance between the drive shaft D and the rear axle R in the vehicle side view. Therefore, even when the pivot shaft P is located higher than the virtual line Q or lower than the virtual line Q in the vehicle side view, it is easy to transmit power from the drive shaft D to the rear wheel 11.

As described above, the fifth distance E5b is shorter than the fifth distance E5a.

Here, the fifth distance E5b is a fifth distance E5 when the pivot shaft P and the rear axle R are located on the virtual line Q, respectively, in the vehicle side view.

The fifth distance E5a is a fifth distance E5 when the pivot shaft P and the rear axle R are located lower than the virtual line Q, respectively, in the vehicle side view.

Therefore, even when the pivot shaft P and the drive shaft D are located lower than the virtual line Q, respectively, in the vehicle side view, it is easy to transmit power from the drive shaft D to the rear wheel 11.

As described above, the fifth distance E5b is shorter than the fifth distance E5c.

Here, the fifth distance E5b is a fifth distance E5 when the pivot shaft P and the rear axle R are located on the virtual line Q, respectively, in the vehicle side view.

The fifth distance E5c is a fifth distance E5 when the pivot shaft P and the rear axle R are located higher than the virtual line Q, respectively, in the vehicle side view.

Therefore, even when the pivot shaft P and the drive shaft D are positioned higher than the virtual line Q, respectively, in the vehicle side view, it is easy to transmit power from the drive shaft D to the rear wheel 11.

The second length PA2 is shorter than the first length PA1. The first length PA1 corresponds to an upper limit value of the amount of the first movement Mz of the pivot shaft P. The second length PA2 corresponds to an upper limit value of the amount of the second movement Mx of the pivot shaft P. Therefore, it is easy to increase the amount of the first movement Mz of the pivot shaft P. Consequently, it is easy to reduce the change in the angle Θ of the rear arm 9. Moreover, it is easy to reduce the amount of the second movement Mx of the pivot shaft P.

The rotating member 19 has an arm shape in the vehicle side view. The arm shape extends from the first shaft A1 to the pivot shaft P. Therefore, the rotating member 19 does not have a disk shape centered on the first shaft A1. Consequently, it is easy to reduce the size of the rotating member 19.

The rotating member 19 includes the front end 19A and the rear end 19B. The front end 19A supports the pivot shaft P. The rear end 19B is supported by the first shaft A1. Therefore, it is easy to reduce the size of the rotating member 19.

The second distance E2 is equal to or smaller than 15 times the first distance E1. The second distance E2 is a distance between the axis p of the pivot shaft P and the axis r of the rear axle R in the side view of the straddled vehicle. Therefore, even when the second distance E2 is comparatively short, it is easy to reduce the change in the angle Θ of the rear arm 9.

The second distance E2 is 750 mm or less. Therefore, even when the second distance E2 is 750 mm or less, it is easy to reduce the change in the angle Θ of the rear arm 9.

When the rear arm 9 moves with respect to the vehicle body frame 2, the coupling mechanism 18 rotates the rotating member 19 about the first shaft A1 with respect to the vehicle body frame 2. When the rear arm 9 moves with respect to the vehicle body frame 2, the rear axle R moves with respect to the vehicle body frame 2. When the coupling mechanism 18 rotates the rotating member 19 about the first shaft A1 with respect to the vehicle body frame 2, the pivot shaft P moves with respect to the vehicle body frame 2. Therefore, it is easy for the pivot shaft P to move with respect to the vehicle body frame 2 when the rear axle R moves with respect to the vehicle body frame 2. Consequently, it is easy to reduce the change in the angle Θ of the rear arm 9.

When the rear axle R moves upward with respect to the vehicle body frame 2, the coupling mechanism 18 moves the pivot shaft P upward with respect to the vehicle body frame 2. When the rear axle R moves downward with respect to the vehicle body frame 2, the coupling mechanism 18 moves the pivot shaft P downward with respect to the vehicle body frame 2. Therefore, it is easy to reduce the change in the angle Θ of the rear arm 9 when the rear axle R moves upward with respect to the vehicle body frame 2. Furthermore, it is easy to reduce the change in the angle Θ of the rear arm 9 when the rear axle R moves downward with respect to the vehicle body frame 2.

When the rear axle R rotates clockwise about the pivot shaft P in the vehicle left side view, the pivot shaft P rotates counterclockwise about the first shaft A1. When the rear axle R rotates counterclockwise about the pivot shaft P in the vehicle left side view, the pivot shaft P rotates clockwise about the first shaft A1. That is, the pivot shaft P rotates in a direction opposite to the rear axle R. Therefore, it is easy to reduce the change in the angle Θ of the rear arm 9.

The coupling mechanism 18 includes the second shaft 31, the first link member 32, the third shaft 33, the fourth shaft 34, the second link member 35, the fifth shaft 36, the sixth shaft 37, and the third link member 38. The second shaft 31 is supported by the vehicle body frame 2(2A) and extends in the width direction Y. The first link member 32 is coupled to the second shaft 31. The third shaft 33 is supported by the first link member 32 and extends in the width direction Y. The fourth shaft 34 is supported by the rear arm 9 and extends in the width direction Y. The second link member 35 is coupled to the third shaft 33 and the fourth shaft 34. The fifth shaft 36 is supported by the first link member 32 and extends in the width direction Y. The sixth shaft 37 is supported by the rotating member 19 and extends in the width direction Y. The third link member 38 is coupled to the fifth shaft 36 and the sixth shaft 37.

When the rear axle R moves with respect to the vehicle body frame 2, the rear arm 9 and the fourth shaft 34 move with respect to the vehicle body frame 2. When the fourth shaft 34 moves with respect to the vehicle body frame 2, the second link member 35 moves with respect to the vehicle body frame 2. When the second link member 35 moves with respect to the vehicle body frame 2, the third shaft 33, the first link member 32, and the fifth shaft 36 rotate about the second shaft 31 with respect to the vehicle body frame 2. When the fifth shaft 36 rotates about the second shaft 31 with respect to the vehicle body frame 2, the third link member 38 moves with respect to the vehicle body frame 2. When the third link member 38 moves with respect to the vehicle body frame 2, the sixth shaft 37, the rotating member 19, and the pivot shaft P rotate about the first shaft A1 with respect to the vehicle body frame 2. In summary, it is easy for the coupling mechanism 18 to move the pivot shaft P with respect to the vehicle body frame 2 when the rear axle R moves with respect to the vehicle body frame 2.

The first link member 32 is configured to rotate about the second shaft 31 with respect to the vehicle body frame 2. The second link member 35 is configured to rotate about the third shaft 33 with respect to the first link member 32. The second link member 35 is configured to rotate about the fourth shaft 34 with respect to the rear arm 9. The third link member 38 is configured to rotate about the fifth shaft 36 with respect to the first link member 32. The third link member 38 is configured to rotate about the sixth shaft 37 with respect to the rotating member 19.

Therefore, when the rear axle R moves with respect to the vehicle body frame 2, it is easier for the coupling mechanism 18 to rotate the rotating member 19 about the first shaft A1 with respect to the vehicle body frame 2. Consequently, it is easier for the coupling mechanism 18 to rotate the pivot shaft P about the first shaft A1 with respect to the vehicle body frame 2 when the rear axle R moves with respect to the vehicle body frame 2.

The rear axle R is disposed more rearward than the pivot shaft P. The fourth shaft 34 is disposed more rearward than the pivot shaft P. The third shaft 33 is disposed more rearward than the second shaft 31. The fifth shaft 36 is disposed more rearward than the second shaft 31. The sixth shaft 37 is disposed more forward than the first shaft A1. The pivot shaft P is disposed more forward than the first shaft A1.

The movement of the rear axle R and the fourth shaft 34 will be described. The rear axle R is disposed more rearward than the pivot shaft P. The fourth shaft 34 is disposed more rearward than the pivot shaft P. The rear axle R and the fourth shaft 34 are coupled by the rear arm 9. The rear arm 9 is configured to rotate about the pivot shaft P. Therefore, when the rear axle R moves upward, the fourth shaft 34 moves upward. When the rear axle R moves downward, the fourth shaft 34 moves downward.

The movement of the fourth shaft 34 and the third shaft 33 will be described. The fourth shaft 34 and the third shaft 33 are coupled by the second link member 35. Therefore, when the fourth shaft 34 moves upward, the third shaft 33 moves upward. When the fourth shaft 34 moves downward, the third shaft 33 moves downward.

The movement of the third shaft 33 and the fifth shaft 36 will be described. The third shaft 33 is disposed more rearward than the second shaft 31. The fifth shaft 36 is disposed more rearward than the second shaft 31. The third shaft 33 and the fifth shaft 36 are coupled by the first link member 32. The first link member 32 is configured to rotate about the second shaft 31. Therefore, when the third shaft 33 moves upward, the fifth shaft 36 moves upward. When the third shaft 33 moves downward, the fifth shaft 36 moves downward.

The movement of the fifth shaft 36 and the sixth shaft 37 will be described. The fifth shaft 36 and the sixth shaft 37 are coupled by the third link member 38. Therefore, when the fifth shaft 36 moves upward, the sixth shaft 37 moves upward. When the fifth shaft 36 moves downward, the sixth shaft 37 moves downward.

The movement of the sixth shaft 37 and the pivot shaft P will be described. The sixth shaft 37 is disposed more forward than the first shaft A1. The pivot shaft P is disposed more forward than the first shaft A1. The sixth shaft 37 and the pivot shaft P are coupled by the rotating member 19. The rotating member 19 is configured to rotate about the first shaft A1. Therefore, when the sixth shaft 37 moves upward, the pivot shaft P moves upward. When the sixth shaft 37 moves downward, the pivot shaft P moves downward.

In summary, when the rear axle R moves upward, the pivot shaft P moves upward. When the rear axle R moves downward, the pivot shaft P moves downward. Consequently, it is easy to reduce the change in the angle Θ of the rear arm 9.

The third distance E3 is shorter than the fourth distance E4. The third distance E3 is a distance between the axis p of the pivot shaft P and the axis 37z of the sixth shaft 37 in the vehicle side view. The fourth distance E4 is a distance between the axis 37z of the sixth shaft 37 and the axis a1 of the first shaft A1 in the vehicle side view. Therefore, when the coupling mechanism 18 rotates the rotating member 19 about the first shaft A1 with respect to the vehicle body frame 2, a load applied to the coupling mechanism 18 is comparatively small. Consequently, it is easy for the coupling mechanism 18 to rotate the rotating member 19 about the first shaft A1 with respect to the vehicle body frame 2. Therefore, it is easy for the coupling mechanism 18 to rotate the pivot shaft P about the first shaft A1 with respect to the vehicle body frame 2.

The fourth distance E4 is longer than half of the first distance E1.

As described above, the fourth distance E4 is a distance between the axis 37z of the sixth shaft 37 and the axis a1 of the first shaft A1 in the vehicle side view.

Therefore, when the coupling mechanism 18 rotates the rotating member 19 about the first shaft A1 with respect to the vehicle body frame 2, a load applied to the coupling mechanism 18 is comparatively small.

Consequently, it is easy for the coupling mechanism 18 to rotate the rotating member 19 about the first shaft A1 with respect to the vehicle body frame 2. Therefore, it is easy for the coupling mechanism 18 to rotate the pivot shaft P about the first shaft A1 with respect to the vehicle body frame 2.

The sixth shaft 37 is disposed more rearward than the pivot shaft P. The sixth shaft 37 is disposed more forward than the first shaft A1. Therefore, it is easy to reduce the size of the rotating member 19.

The sixth shaft movable range H is limited to an area more forward than the first shaft A1. The sixth shaft movable range H is a range in which the sixth shaft 37 is movable. Therefore, it is easy to limit the pivot movable range G to an area more forward than the first shaft A1. Consequently, it is easy to further reduce the amount of the second movement Mx of the pivot shaft P.

The straddled vehicle 1 includes the rear suspension 15. The rear suspension 15 is coupled to the vehicle body frame 2 and the rear arm 9. As described above, it is easy to reduce the change in the angle Θ of the rear arm 9. Therefore, it is easy to adjust the rear suspension 15. For example, it is easy to improve the ride comfort of the straddled vehicle 1 by setting the rear suspension 15.

The rear suspension 15 is coupled to the rear arm 9 via the coupling mechanism 18. Therefore, it is easy to couple the rear suspension 15 to the rear arm 9.

The rear suspension 15 is coupled to the rear arm 9 via the first link member 32. Therefore, it is easy to couple the rear suspension 15 to the rear arm 9.

The straddled vehicle 1 includes the seventh shaft 39 and the eighth shaft 40. The seventh shaft 39 is supported by the vehicle body frame 2 and extends in the width direction Y. The eighth shaft 40 is supported by the first link member 32 and extends in the width direction Y. The rear suspension 15 is coupled to the seventh shaft 39 and the eighth shaft 40. Therefore, it is easy to couple the rear suspension 15 to the vehicle body frame 2 and the rear arm 9.

The straddled vehicle 1 includes the drive shaft D and the drive mechanism 12. The drive shaft D outputs power. The drive mechanism 12 is coupled to the drive shaft D and the rear wheel 11. The drive mechanism 12 is configured to transmit power from the drive shaft D to the rear wheel 11. Therefore, it is easy to rotate the rear wheel 11 about the rear axle R.

The drive shaft D is disposed more forward than the pivot shaft P. As described above, the first distance E1 is 50 mm or more. Therefore, it is easy to reduce the amount of the second movement Mx of the pivot shaft P. Consequently, it is easy to reduce the change in the fifth distance E5. Therefore, it is easy for the drive mechanism 12 to transmit power from the drive shaft D to the rear wheel 11.

The drive mechanism 12 includes the chain 13. The chain 13 is coupled to the drive shaft D and the rear axle R. The straddled vehicle 1 does not include a mechanism that adjusts the tension of the chain 13. Therefore, the drive mechanism 12 has a simple structure.

In the straddled vehicle 1, even when the pivot shaft P moves with respect to the vehicle body frame 2, the chain 13 is stretched without using the mechanism that adjusts the tension of the chain 13. That is, the chain 13 is less likely to sag without using the mechanism that adjusts the tension of the chain 13. Therefore, it is not necessary for the drive mechanism 12 to include the mechanism that adjusts the tension of the chain 13.

The movement of the coupling mechanism 18 is independent of the change in the tension in the chain 13. In other words, in the straddled vehicle 1, the movement of the pivot shaft P with respect to the vehicle body frame 2 is independent of the change in the tension of the chain 13. Therefore, it is easy to make the coupling mechanism 18 have a simple structure.

### <9. Modified embodiments>

(1) In the embodiment, the first distance E1 is 50 mm or more. Alternatively, the first distance E1 may be 100 mm or more. Therefore, it is easier to reduce the amount of the second movement Mx of the pivot shaft P.
(2) The pivot movable range G may extend from a position higher than the first shaft A1 to a position lower than the first shaft A1 in the vehicle side view. Therefore, it is easy to increase the amount of the first movement Mz of the pivot shaft P.
   Alternatively, the pivot movable range G may not extend to a position lower than the first shaft A1 in the vehicle side view. The pivot movable range G may be limited to a position higher than the first shaft A1 in the vehicle side view. The entire pivot movable range G may be higher than the first shaft A1 in the vehicle side view.
(3) A part of the pivot movable range G may overlap the sixth shaft movable range H in the front-rear direction X. A part of the pivot movable range G may overlap a part of the sixth shaft movable range H in the front-rear direction X. Even if a part of the pivot movable range G overlaps with the sixth shaft movable range H, it is easy to reduce the amount of the second movement Mx.
(4) In the embodiment, the second distance E2 is equal to or smaller than 15 times the first distance E1. Alternatively, when the first distance E1 is 100 mm or more, the second distance E may be equal to or smaller than 5 times the first distance E1. For example, when the first distance Ed1 is 100 mm or more, the second distance Ed2 is equal to or less than 5 times the first distance Ed1. When the first distance Ed1 is 100 mm or more, the second distance Ed2 is equal to or less than 4 times the first distance Ed1. When the first distance Ed1 is 100 mm or more, the second distance Ed2 is equal to or less than 3 times the first distance Ed1. When the first distance Ed1 is 100 mm or more, the second distance Ed2 is equal to or less than 2 times the first distance Ed1. Therefore, even when the second distance E2 is even shorter, it is easy to reduce the change in the angle Θ of the rear arm 9.
(5) In the embodiment, the pivot shaft P does not overlap the vehicle body frame 2 in the vehicle left side view. However, the pivot shaft P may overlap the vehicle body frame 2 in the vehicle side view. In this case, the pivot shaft P may be disposed inward of the vehicle body frame 2 in the width direction Y.
(6) In the embodiment, the rotating member 19 extends to the front from the first shaft A1. However, the rotating member 19 may extend rearward from the first shaft A1.
(7) In the embodiment, the rotating member 19 has an arm shape extending linearly or an arm shape extending in a rod shape. Alternatively, the rotating member 19 may have a fan shape. The rotating member 19 may have a semicircular shape. The rotating member 19 may have a bent arm shape.
(8) In the embodiment, the drive shaft D, the pivot shaft Pb, the first shaft A1, and the rear axle Rb are located on a straight line in the vehicle side view. However, in the vehicle side view, one element of the drive shaft D, the pivot shaft Pb, the first shaft A1, and the rear axle Rb may not be located on a straight line. In the vehicle side view, two elements among the drive shaft D, the pivot shaft Pb, the first shaft A1, and the rear axle Rb may not be located on a straight line.
(9) In the embodiment, the first link member 32 has a substantially triangular shape. Alternatively, the first link member 32 may have a V shape, a U shape, a substantially quadrangular shape, or the like.
(10) In the embodiment, the second link member 35 and the third link member 38 have an arm shape extending linearly or an arm shape extending in a rod shape. Alternatively, the second link member 35 and the third link member 38 may be bent.
(11) In the embodiment, the rear arm 9 has a triangular shape in the vehicle side view. Alternatively, the rear arm 9 may be linear or bent.
(12) In the embodiment, the drive mechanism 12 includes the chain 13. Alternatively, the drive mechanism 12 may include at least one of a chain, a belt, and a drive shaft DS. For example, the drive mechanism 12 may transmit power from the drive shaft D to the rear wheel 11 by at least one of a chain, a belt, and a drive shaft DS. The drive mechanism 12 may be a so-called shaft drive system. In the shaft driving system, the chain 13 is not provided, and the rear wheel 11 is driven by the drive shaft DS. Illustration of the drive shaft DS is omitted.
(13) In the embodiment, the angle Θ of the rear arm 9 is an angle between the axis J of the rear arm 9 and the reference line K. The reference line K is parallel to the up-down direction Z. Alternatively, the reference line K may be horizontal. The reference line K may be defined by the vehicle body frame 2. The reference line K may be defined by the main frame 6. The reference line K may be defined by at least one of the drive shaft D, the first shaft A1, and the second shaft 31. Alternatively, the reference line K may be defined by a road surface with which the rear wheel 11 comes into contact.
(14) In the embodiment, the number of front wheels 8 is one. Alternatively, the number of front wheels 8 may be two. In the embodiment, the number of rear wheels 11 is one. Alternatively, the number of rear wheels 11 may be two.
(15) In the embodiment, a sports-type vehicle as the straddled vehicle 1 is exemplified. Alternatively, the straddled vehicle 1 may be changed to other types of vehicles such as a street type, a scooter type, an off-road type, and an ALL-TERRAIN VEHICLE. Reference Signs List

1: Straddled vehicle
2: Vehicle body frame
3: Steering device
4: Handle
5: Seat
5: Front suspension
6: Main frame
8: Front wheel
9: Rear arm
10: Engine
11: Rear wheel
12: Drive mechanism
13: Chain
14: Fuel tank
15: Rear suspension
18: Coupling mechanism
19: Rotating member
19A: Front end
19B: Rear end
31: Second shaft
32: First link member
33, 33a, 33b, 33c: Third shaft
34, 34a, 34b, 34c: Fourth shaft
35: Second link member
36, 36a, 36b, 36c: Fifth shaft
37, 37a, 37b, 37c: Sixth shaft
37z: Axis of sixth shaft
38: Third link member
39: Seventh shaft
40: Eighth shaft
A1: First shaft
a1: Axis
D: Drive shaft
d: Axis
DS: Drive sprocket
E1: First distance
E2: Second distance
E3: Third distance
E4: Fourth distance
E5: Fifth distance
F: Front axle
G: Pivot movable range
H: Sixth shaft movable range
J, Ja, Jb, Jc: Axis of rear arm
K: Reference line
P: Pivot shaft
Pa, Pb, Pc: Position
p: Axis of pivot shaft
Q: Virtual line connecting drive shaft D and first shaft in a vehicle side view
R, Ra, Rb, Rc: Rear axle
r: Axis
RS: Driven sprocket

## Claims

1. A straddled vehicle (1) comprising:
a vehicle body frame (2);
a first shaft (A1) supported by the vehicle body frame (2) and extending in a width direction (Y) of the straddled vehicle (1);
a rotating member (19) supported by the first shaft (A1) and configured to rotate about the first shaft (A1) with respect to the vehicle body frame (2);
a pivot shaft (P) supported by the rotating member (19) and extending in the width direction (Y) of the straddled vehicle (1);
a rear arm (9) supported by the pivot shaft (P) and configured to rotate about the pivot shaft (P) with respect to the rotating member (19) with regard to an up-down direction (Z) of the straddled vehicle (1);
a rear axle (R) supported by the rear arm (9) and extending in the width direction (Y) of the straddled vehicle (1);
a rear wheel (11) arranged at a rear side with regard to the front-rear direction (X) of the straddled vehicle (1) and supported by the rear axle (R) ; and
a coupling mechanism (18) coupled to the vehicle body frame (2), the rotating member (19), and the rear arm (9),
wherein in a side view of the straddled vehicle (1), a distance between an axis (a1) of the first shaft (A1) and an axis (p) of the pivot shaft (P) is defined as a first distance (E1), and
the first distance (E1) is 50 mm or more.

2. The straddled vehicle (1) according to claim 1, wherein a range in which the pivot shaft (P) is movable is defined as a pivot movable range (G), and
the pivot movable range (G) is limited to an area more forward than the first shaft (A1) with regard to the front-rear direction (X) of the straddled vehicle (1).

3. The straddled vehicle (1) according to claim 2, further comprising a drive shaft (D) that outputs power,
wherein the drive shaft (D) is disposed more forward than the pivot shaft (P) with regard to the front-rear direction (X) of the straddled vehicle (1),
a virtual line connecting the drive shaft (D) and the first shaft (A1) is defined as a virtual line (Q), and
the pivot movable range (G) extends from a position higher than the virtual line (Q) to a position lower than the virtual line (Q) with regard to the up-down direction (Z) of the straddled vehicle (1) in a side view of the straddled vehicle (1).

4. The straddled vehicle (1) according to claim 3, wherein a distance between the drive shaft (D) and the rear axle (R) is defined as a distance (E5b),
a distance between the drive shaft (D) and the rear axle (R) is defined as a distance (E5a) (E5c), and
the distance (E5b) when the pivot shaft (P) is located on the virtual line (Q) in a side view of the straddled vehicle (1) is shorter than the distance (E5a) (E5c) when the pivot shaft (P) is located higher than the virtual line (Q) or lower than the virtual line (Q) with regard to the up-down direction (Z) of the straddled vehicle (1) in a side view of the straddled vehicle.

5. The straddled vehicle (1) according to claim 2 or 3, wherein a length of the pivot movable range (G) in the up-down direction (Z) of the straddled vehicle (1) is defined as a first length (PA1),
a length of the pivot movable range (G) in the front-rear direction (X) of the straddled vehicle (1) is defined as a second length (PA2), and
the second length (PA2) is shorter than the first length (PA1).

6. The straddled vehicle (1) according to claim 1 or 2, wherein the rotating member (19) has an arm shape extending from the first shaft (A1) to the pivot shaft (P) in a side view of the straddled vehicle (1).

7. The straddled vehicle (1) according to claim 1 or 2, wherein the rotating member (19) includes a rear end (19B) supported by the first shaft (A1), and a front end (19A) supporting the pivot shaft (P).

8. The straddled vehicle (1) according to claim 1 or 2, wherein in a side view of the straddled vehicle (1), a distance between the axis (p) of the pivot shaft (P) and an axis (r) of the rear axle (R) is defined as a second distance (E2), and
the second distance (E2) is equal to or smaller than 15 times the first distance (E1).

9. The straddled vehicle (1) according to claim 8, wherein the second distance (E2) is 750 mm or less.

10. The straddled vehicle (1) according to claim 1 or 2, wherein when the rear axle (R) moves upward with respect to the vehicle body frame (2) with regard to the up-down direction (Z) of the straddled vehicle (1), the coupling mechanism (18) moves the pivot shaft (P) upward with respect to the vehicle body frame (2) with regard to the up-down direction (Z) of the straddled vehicle (1), and
when the rear axle (R) moves downward with respect to the vehicle body frame (2) with regard to the up-down direction (Z) of the straddled vehicle (1), the coupling mechanism (18) moves the pivot shaft (P) downward with respect to the vehicle body frame (2) with regard to the up-down direction (Z) of the straddled vehicle (1).

11. The straddled vehicle (1) according to claim 1 or 2, wherein when the rear axle (R) rotates clockwise about the pivot shaft (P) in a left side view of the straddled vehicle, the pivot shaft (P) rotates counterclockwise about the first shaft (A1), and
when the rear axle (R) rotates counterclockwise about the pivot shaft (P) in the left side view of the straddled vehicle, the pivot shaft (P) rotates clockwise about the first shaft (A1).

12. The straddled vehicle (1) according to claim 1 or 2, wherein the coupling mechanism (18) includes:
a second shaft (31) supported by the vehicle body frame (2) and extending in the width direction (Y) of the straddled vehicle (1);
a first link member (32) coupled to the second shaft;
a third shaft (33) supported by the first link member (32) and extending in the width direction (Y) of the straddled vehicle (1);
a fourth shaft (34) supported by the rear arm (9) and extending in the width direction (Y) of the straddled vehicle (1);
a second link member (35) coupled to the third shaft (33) and the fourth shaft (34);
a fifth shaft (36) supported by the first link member (32) and extending in the width direction (Y) of the straddled vehicle (1);
a sixth shaft (37) supported by the rotating member (19) and extending in the width direction (Y) of the straddled vehicle (1); and
a third link member (38) coupled to the fifth shaft (36) and the sixth shaft (37).

13. The straddled vehicle (1) according to claim 12, wherein in a side view of the straddled vehicle (1), a distance between the axis (p) of the pivot shaft (P) and an axis (37z) of the sixth shaft (37) is defined as a third distance (E3),
in the side view of the straddled vehicle (1), a distance between the axis (37z) of the sixth shaft (37) and the axis (a1) of the first shaft (A1) is defined as a fourth distance (E4), and
the third distance (E3) is shorter than the fourth distance (E4).

14. The straddled vehicle (1) according to claim 12, wherein the sixth shaft (37) is disposed more rearward than the pivot shaft (P) and more forward than the first shaft (A1) with regard to the front-rear direction (X) of the straddled vehicle (1).

15. The straddled vehicle (1) according to claim 12, wherein a range in which the sixth shaft (37) is movable is defined as a sixth shaft movable range (H), and
the sixth shaft movable range (H) is limited to an area more forward than the first shaft (A1) with regard to the front-rear direction (X) of the straddled vehicle (1).
